(19) Europäisches Patentamt
European Patent Office
Office européen des brevets

(11) EP 1 677 438 B1

(12) **EUROPEAN PATENT SPECIFICATION**

(45) Date of publication and mention of the grant of the patent:
**31.12.2014 Bulletin 2015/01**

(51) Int Cl.:
***H04B 7/08*** *(2006.01)*

(21) Application number: **05251647.3**

(22) Date of filing: **17.03.2005**

(54) **Wireless receiving device and receiving method**

Drahtloses Empfangsgerät und Empfangsverfahren

Appareil de réception sans fil et procédé de réception

(84) Designated Contracting States:
**DE FR GB**

(30) Priority: **28.12.2004 JP 2004378888**

(43) Date of publication of application:
**05.07.2006 Bulletin 2006/27**

(73) Proprietor: **FUJITSU LIMITED**
**Kawasaki-shi,**
**Kanagawa 211-8588 (JP)**

(72) Inventor: **Lozhkin, Alexander,**
**Fujitsu Limited**
**Kawasaki-shi,**
**Kanagawa 211-8588 (JP)**

(74) Representative: **Lewin, David Nicholas et al**
**Haseltine Lake LLP**
**Lincoln House, 5th Floor**
**300 High Holborn**
**London WC1V 7JH (GB)**

(56) References cited:
**US-A1- 2002 193 146**

- **PATENT ABSTRACTS OF JAPAN vol. 2003, no. 12, 5 December 2003 (2003-12-05) & JP 2004 297280 A (FUJITSU LTD), 21 October 2004 (2004-10-21)**
- **HOLGER CLAUSSEN ET AL: "Layered encoding for 16- and 64-QAM iterative MIMO receivers" PERSONAL MOBILE COMMUNICATIONS CONFERENCE, 2003. 5TH EUROPEAN, 22 April 2003 (2003-04-22), - 25 April 2003 (2003-04-25) pages 511-515, XP002374358**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 677 438 B1

Printed by Jouve, 75001 PARIS (FR)

## Description

BACKGROUND OF THE INVENTION

This invention relates to a wireless communication device, and in particular relates to a MIMO (Multiple-Input, Multiple-Output)-capable wireless communication device in a transmission system comprising a MIMO configuration.

Among current wireless communication systems, there is increasing interest in space division multiplexing transmission technologies (MIMO transmission systems) in which, by transmitting different data streams in parallel from a plurality of transmission antennas, the transmission capacity can be increased in proportion to the number of transmission antennas.

In a MIMO transmission system, normally signal processing to subtract replicas which occur is employed to remove the interference by other data streams from a data stream of interest (V-BLAST, MSSE-VBLAST, Zero-Forced V-BLAST).

In contrast with such normal methods, a wireless communication device (turbo receiver device) of this invention performs iterative maximum likelihood estimation. The turb receiver device of this invention exhibits BER results which are extremely close to those for the maximum likelihood decoding (MLD) method, and at the same time alleviates the complexity of calculations.

The turbo receiver device of this invention is based on a maximum posterior probability estimation algorithm. In this turbo receiver device, after nonlinear processing, information derived from one channel refines the estimated maximum posterior probability of another channel, and similarly, information derived from the other channel refines the estimated maximum probability of the one channel.

Fig. 1 shows the configuration of a MIMO system, where TRX is a transmission station and REC is a receiver station.

Data streams $D_0$ to $D_{M-1}$ of the same number as the number of transmission antennas M pass through data modulation, D/A conversion, quadrature modulation, frequency up-conversion, and other processing by respective transmission devices $TRX_0$ to $TRX_{M-1}$, and are transmitted to the respective transmission antennas $ATT_0$ to $ATT_{M-1}$. Signals transmitted from the antennas $ATT_0$ to $ATT_{M-1}$ pass through independent fading channels $h_{nm}$ (m=0 to M-1, n=0 to N-1), and after space division multiplexing, are received by N receiving antennas $ATR_0$ to $ATR_{N-1}$. Signals received by the receiving antennas pass through frequency down-conversion, quadrature detection, A/D conversion and other processing by receiving devices $REC_0$ to $REC_{N-1}$, and received data streams $y_0$ to $y_{N-1}$ are generated. Each of these received data streams is in the form of M multiplexed transmitted data streams, so that by performing signal processing of all received data streams, the transmitted data streams are separated and reproduced.

Algorithms for signal processing to separate transmitted data streams $D_0$ to $D_{M-1}$ from received signals include such linear algorithms as ZF (Zero-Forcing) and MMSE which use the inverse matrix of a channel correlation matrix (see A. van Zelst, "Space Division Multiplexing Algorithms", 10th Mediterranean Electrotechnical Conference 2000, MELECON 2000, Cyprus, May 2000, Vol. 3, pp. 1218-1221), and nonlinear algorithms of which BLAST (Bell Laboratories Layered Space-Time) is representative. In addition, there are also methods, such as MLD (Maximum Likelihood Decoding), which do not use operations on the inverse matrix of a correlation matrix (see Geert Awater, Allert van Zelst and Richard van Nee, "Reduced Complexity Space Division Multiplexing Receivers", in Proc. IEEE VTC 2000, Tokyo, Japan, May 15-18, 2000, Vol. 2, pp. 1070-1074).

• ZF (Zero-Forcing) Algorithm

If a transmitted data stream is represented by an M-dimensional complex matrix, and a received data stream by an N-dimensional complex matrix, then the following relation obtains.

$$Y = H \cdot D \qquad (1)$$

$$H = \begin{bmatrix} h_{00} \cdot h_{01} \cdots\cdots h_{0M-1} \\ h_{10} \cdots\cdots\cdots\cdots h_{1M-1} \\ \cdots\cdots\cdots\cdots\cdots\cdots \\ h_{N-10} \cdots\cdots\cdots h_{N-1M-1} \end{bmatrix}$$

$$D = \lfloor D_0 \cdot D_1 \cdots\cdots D_{M-1} \rceil^{-1}$$

$$Y = \lfloor y_0 \cdot y_1 \cdots\cdots y_{N-1} \rceil^{-1}$$

The ZF (Zero-Forcing) algorithm uses the following equation to estimate the transmitted data stream.

$$\hat{D} = \left(H^{*} \cdot H\right)^{-1} H^{*} D = H^{+} \cdot Y \qquad (2)$$

Here, H*H is called the channel correlation matrix. H+ denotes the pseudo-inverse matrix; in order for this pseudo-inverse matrix to exist, it is necessary that N≥M.

·MMSE Algorithm

The MMSE (Minimum Mean Square Error) method is another linear estimation approach in which the transmitted data stream (received data vector) D is estimated based on the received data stream Y. In this MMSE algorithm, the following equation is used to determine the matrix G:

$$\varepsilon^2 = E\left[\left(D - \hat{D}\right)^{*}\left(D - \hat{D}\right)\right] = \left[\left(D - G \cdot Y\right)^{*}\left(D - G \cdot Y\right)\right] \qquad (3)$$

Then, the following equation is sued to estimate the data stream D.

$$\hat{D} = \left(\alpha \cdot I + H^{*} \cdot H\right)^{-1} H^{*} \cdot Y \qquad (4)$$

Here, $\alpha$ is the noise dispersion, and I is a matrix which depends on G. The ZF algorithm corresponds to the MMSE algorithm when $\alpha$=0.

· Decision Feedback Decoding

It is expected that if the most reliable element of the transmitted vector data D is decoded and used to improve decoding of the other elements, performance will be improved. This method is called symbol cancellation, and when combined with the ZF method and MMSE method, is known as ZF-VBL and MSSE-VBL.

· MLD Algorithm

The MLD algorithm is a method which does not use operations in the inverse matrix of a correlation matrix, but uses the following equation to estimate the transmitted data stream (transmission vector) D.

$$\hat{D} = \arg\min \left\| Y - H \cdot D \right\|^2 \qquad (5)$$

Here, if the number of signal constellations of modulated data input to M antennas is Q, then there exist $Q^M$ combinations of transmission vectors D. In QPSK Q=4, in 16QAM Q=16, and in 64QAM Q=64. In the MLD algorithm, candidates (replicas) of the $Q^M$ transmission vectors are generated, and the operation of equation (5) is performed, and the replica the result for which is smallest is estimated to be the input data.

This inventor has proposed an iterative MAP detector which can be applied to MIMO communication systems (Alexander N. Lozhkin, "Novel Interactive MAP Detector for MIMO Communication" , Proc. WPMC '04, Sept. 12-15, 2004, Abano Terme, Italy).

Fig. 2 shows simulation results for each of the above reception methods (the ZF-VBL, MSSE-VBL, and MLD methods), indicating the BER (Bit Error Rate) for $2Eb/N_0$. In simulations, two transmission antennas and two reception antennas were assumed, QPSK modulation was performed, and signals were transmitted without encoding. Fig. 2 also shows simulations results when there is no interchannel interference (ICI-free), and for REF. The ICI-free points are equivalent to AWGN obtained using simulation software. Points marked as REF are equivalent to data calculated using the following equation.

$$P_{err} = \frac{1}{2} \cdot erfc\left(\sqrt{\frac{E_b}{N_0}}\right), \quad \text{where} \quad erfc(x) = 1 - erf(x) = \frac{2}{\sqrt{\pi}} \int_x^{\infty} e^{-t^2} dt$$

From the simulation results, there is the problem that the BER for the ZF-VBL and MSSE-VBL methods is substantially higher than the bit error rate for the MLD method. On the other hand, although the error rate for the MLD method is low, there are the problems that the volume of computations required is huge, and that the volume of computations increases exponentially as the number of antennas is increased.

The conventional technology described in the reference by Lozhkin above proposes a method which lower the bit error rate and reduces the volume of computations, but with insufficient results.

JP 2004 297280 A discloses an MC-CDMA communication system receiving signals from at least two users through a plurality of subcarriers, a transmitter performs code multplexing of the signals from two users spread by different codes, and performs MC-CDMA transmission using a plurality of subcarriers. A receiver comprises a receiving section for receiving MC-CDMA signals, despreading the received signal by a transmission side code and making a soft decision of the received data from each user obtained through nonlinear processing. One receiving section adjusts its own soft decision object value using a soft decision object value inputted from the other receiving section and judges the received data based on the soft decision object value.

US 2002/193146 (A1) discloses a method and apparatus for negotiating a transmission scenario in a mixed mode spectrum wireless communication system capable of both MISO and SISO traffic. The transmitter determines an antenna diversity configuration for a given communication link and applies a transmission scenario. The base station queries the remote station for antenna diversity status. In response to the antenna diversity status information, the base station determines and applies a transmission scenario.

## SUMMARY OF THE INVENTION

Hence an object of the invention is to further extend the conventional technology described in the reference by Lozhkin above, to provide a wireless communication device with a lower bit error rate, and for which the volume of computation can be reduced.

The invention proposes a reception method according to claim 1 and a receiver device according to claim 5. Further embodiments are disclosed in the dependent claims.

There is disclosed a wireless device, comprising a plurality of receiving antennas which receive signals output from transmitting antennas over a plurality of transmission paths having different propagation characteristics, and receivers provided for each of the plurality of antennas, and in which the receivers provided for the plurality of antennas separate signals received by the receiving antennas into quadrature components, process the received signals, and perform data conversion between the receivers.

In the above wireless device, calculations are repeated a plurality of times to determine a bit estimate value from signals received by the receivers provided for each of the plurality of antennas using the receiving antennas.

In the above wireless device, the receivers provided for each of the plurality of antennas comprise a nonlinear processing circuit having as a transfer function an amplitude limiter, and a decision circuit which performs bit decisions for signals received from the receiving antenna; when the decision circuit performs bit decisions, a bit estimate value for adjacent data streams after nonlinear processing is used.

In the above wireless device, the receivers provided for each of the plurality of antennas comprise a nonlinear processing circuit having as a transfer function an amplitude limiter, and a decision circuit which performs bit decisions for signals received from the receiving antenna; when the decision circuit performs bit decisions, a bit estimate value for the same data stream after nonlinear processing is used.

In the above wireless device, of the receivers provided for the plurality of antennas, a first bit estimate value determined from a signal received by a first receiver provided for a first receiving antenna, and a second bit estimate value determined from a signal received by a second receiver provided for a second receiving antenna, are synthesized to perform final decision processing.

In the above wireless device, the receivers provided for each of the plurality of antennas comprise a nonlinear processing circuit having as a transfer function an amplitude limiter, and sets the limit level of the nonlinear processing circuit to a value which depends on the signal-to-noise ratio and on transmitted signal energy differences.

In the above wireless device, the receivers provided for each of the plurality of antennas comprise a nonlinear processing circuit having as a transfer function an amplitude limiter and a decision circuit which performs bit decisions for signals received by the receiving antenna, and when performing bit decisions for a received signal, the decision circuit uses the soft decision result for adjacent data after nonlinear processing in the nonlinear processing circuit.

By means of this invention, the bit estimate values are determined by receivers connected to a plurality of antennas (for example, first and second antennas), and one bit estimate value is refined using the other bit estimate value, so that BER characteristics can be improved, and moreover the volume of computations can be reduced by using nonlinear processing circuitry, and in addition the configuration can be simplified. By increasing the number of iterated refinements, the BER characteristic can be further improved.

Other features and advantages of the present invention will be apparent from the following description taken in conjunction with the accompanying drawings.

BRIEF DESCRIPTION OF THE DRAWINGS

Fig. 1 shows the configuration of a MIMO system;

Fig. 2 shows simulation results (BER characteristics) for different reception methods (ZF-VBL method, MSSE-VBL method, MLD method);

Fig. 3 shows the configuration of a MIMO transmission system when a transmission station and reception station each comprise two antennas;

Fig. 4 shows the transfer characteristic of a limiter, which is a nonlinear element;

Fig. 5 shows the configuration of a first S0 to S4 generation portion;

Fig. 6 shows a computation circuit which computes the difference $\Delta \ln P_{REC0}$ (0,I) in probabilities when the real part of the symbol Do is +1 and is -1 from the input signal $y_0(t)$ of the first reception device REC0;

Fig. 7 shows the configuration of a second S0 to S4 generation portion;

Fig. 8 shows a computation circuit which computes the difference $\Delta \ln P_{REC1}$(0,I) in probabilities when the real part of the symbol Do is +1 and is -1 from the input signal $y_1(t)$ of the second reception device REC1;

Fig. 9 shows a decision circuit for the real part of the first symbol $D_0$;

Fig. 10 shows a decision circuit for the real part of the second symbol $D_1$;

Fig. 11 shows the configuration of a third S0 to S4 generation portion;

Fig. 12 shows a computation circuit which computes the difference $\Delta \ln P_{REC0}$(0,Q) in probabilities when the imaginary part of the symbol Do is +1 and is -1 from the input signal $y_0(t)$ of the first reception device REC0 ;

Fig. 13 shows the configuration of a fourth S0 to S4 generation portion;

Fig. 14 shows a computation circuit which computes the difference $\Delta \ln P_{REC1}$(0,Q) in probabilities when the imaginary part of the symbol Do is +1 and is -1 from the input signal $y_1(t)$ of the second reception device REC1;

Fig. 15 shows a decision circuit for the imaginary part of the first symbol $D_0$;

Fig. 16 shows a decision circuit for the imaginary part of the second symbol $D_1$; and,

Fig. 17 shows the BER characteristic when the reception device of this invention repeats computations twice.

DESCRIPTION OF THE PREFERRED EMBODIMENTS

A first bit estimate value of a first data stream is determined from the signals received by a first antenna, and a second bit estimate value of the first data stream is determined from signals received by a second antenna; these bit estimate values are then synthesized to determine a synthesized estimate value. Also, a first bit estimate value of a second data stream is determined from the signals received by a first antenna, and a second bit estimate value of the second data stream is determined from signals received by a second antenna; these bit estimate values are then synthesized to determine a synthesized estimate value. The bit estimate value for the first data stream is then refined using the synthesized estimate value for the second data stream, and based on the synthesized estimate value for the first data stream, the first data stream bits are decided. Also, the bit estimate value for the second data stream is refined using the synthesized estimate value for the first data stream, and based on the synthesized estimate value for the second data stream, bits for the second data stream are decided. Hereinafter, "bit estimate" is used instead of the wording of "bit estimate value".

Embodiment 1

Fig. 3 shows the configuration of a MIMO transmission system when a transmission station and reception station each comprise two antennas. As shown in (A), the transmission station TRX comprises two transmitters TRX0, TRX1 and two transmission antennas AT1, AT2, and the reception station REC comprises two receiving antennas AR1, AR2 and two receivers REC0, REC1. As shown in (B), each of the receivers REC0, REC1 comprises a reception portion RV and a signal processing portion PR; the reception portion RV performs data modulation, D/A conversion, quadrature modulation, frequency up-conversion, and other processing, and inputs signals $y_0$, $y_1$ to the signal processing portion PR; the signal processing portion PR performs data stream bit decisions. The explanation below is based on (A) in Fig. 3.

Each of the transmitters TRX0, TRX1 subjects information symbols $D_i$ (i=0,1) to QPSK or BPSK modulation, and transmits the signals. The first transmitter TRX0 transmits the first data stream, and the second transmitter TRX1 transmits the second data stream.

Information symbols $D_i$ (i=0,1) comprising the first and second data streams have a real part $Re(D_i)$ and an imaginary part $Im(D_i)$. Hence $D_i=(d_{Re},d_{Im})$, $d_{Re}=Re(D_i)$, and $d_{Im}=Im(D_i)$. When QPSK is used, an information symbol $D_i$ is one of four possible signals $S_j^*(t)$ (j=0,1,2,3). The number of j in the signal $S_j^*(t)$ depends on the pair of data bits $d_{Re}=Re(D_i)$ and $d_{Im}=Im(D_i)$, as indicated in Table 1.

[Table 1]

| *j* | Signal | *D* | $d_{Re} = Re(D_i)$ | $d_{Im} = Im(D_i)$ |
|---|---|---|---|---|
| 0 | $S^*_0(t)$ | (+1+1) | (+1) | (+1) |
| 1 | $S^*_1(t)$ | (+1-1) | (+1) | (-1) |
| 2 | $S^*_2(t)$ | (-1+1) | (-1) | (+1) |
| 3 | $S^*_3(t)$ | (-1-1) | (-1) | (-1) |

Here it should be noted that for signals $S_j^*(t)$ the relations $S_0^*(t)=-S_3^*(t)$ and $S_1^*(t)=-S_2^*(t)$ obtain. If QPSK transmission is used, the received signals $y_0(t)$, $y_1(t)$ in the first and second receivers REC0, REC1 can be represented as linear combinations of signals transmitted by the transmitters TRX0, TRX1 according to the following equation.

$$y_0(t) = h_{00} \cdot D_0 + h_{01} \cdot D_1 \qquad (6)$$

$$y_1(t) = h_{10} \cdot D_0 + h_{11} \cdot D_1 \qquad (6)'$$

New notation $S_{ij}^*(t)$ for transmitted signals is introduced. The index i in $S_{ij}^*(t)$ indicates the number (0,1) of the transmitter; the index j indicates the information symbol $S_j^*(t)$ (j=0,1,2,3) in Table 1 transmitted by the first transmitter.

Input to each of the receivers REC0, REC1 can be any of 16 possible signals, resulting from combination of the transmission information signals $D_i(0,1)$ of the first and second transmitters TRX1, TRX2. Table 2 indicates all possible signals for input to the first receiver REC0; Table 3 indicates all possible signals for input to the second receiver

REC1.

[Table 2]

| $S_j(t)$ | $D_0$ | $D_1$ | $S_j(t)$ | $D_0$ | $D_1$ |
|---|---|---|---|---|---|
| $S_0 = h_{00} \cdot S_{00}^* + h_{01} \cdot S_{10}^*$ | (+1+1) | (+1+1) | $S_8 = h_{00} \cdot S_{02}^* + h_{01} \cdot S_{10}^*$ | (-1+1) | (+1+1) |
| $S_1 = h_{00} \cdot S_{00}^* + h_{01} \cdot S_{11}^*$ | (+1+1) | (+1-1) | $S_9 = h_{00} \cdot S_{02}^* + h_{01} \cdot S_{11}^*$ | (-1+1) | (+1-1) |
| $S_2 = h_{00} \cdot S_{00}^* + h_{01} \cdot S_{12}^*$ | (+1+1) | (-1+1) | $S_{10} = h_{00} \cdot S_{02}^* + h_{01} \cdot S_{12}^*$ | (-1+1) | (-1+1) |
| $S_3 = h_{00} \cdot S_{00}^* + h_{01} \cdot S_{13}^*$ | (+1+1) | (-1-1) | $S_{11} = h_{00} \cdot S_{02}^* + h_{01} \cdot S_{13}^*$ | (-1+1) | (-1-1) |
| $S_4 = h_{00} \cdot S_{01}^* + h_{01} \cdot S_{10}^*$ | (+1-1) | (+1+1) | $S_{12} = h_{00} \cdot S_{03}^* + h_{01} \cdot S_{10}^*$ | (-1-1) | (+1+1) |
| $S_5 = h_{00} \cdot S_{01}^* + h_{01} \cdot S_{11}^*$ | (+1-1) | (+1-1) | $S_{13} = h_{00} \cdot S_{03}^* + h_{01} \cdot S_{11}^*$ | (-1-1) | (+1-1) |
| $S_6 = h_{00} \cdot S_{01}^* + h_{01} \cdot S_{12}^*$ | (+1-1) | (-1+1) | $S_{14} = h_{00} \cdot S_{03}^* + h_{01} \cdot S_{12}^*$ | (-1-1) | (-1+1) |
| $S_7 = h_{00} \cdot S_{01}^* + h_{01} \cdot S_{13}^*$ | (+1-1) | (-1-1) | $S_{15} = h_{00} \cdot S_{03}^* + h_{01} \cdot S_{13}^*$ | (-1-1) | (-1-1) |

[Table 3]

| $S_j(t)$ | $D_0$ | $D_1$ | $S_j$ (t) | $D_0$ | $D_1$ |
|---|---|---|---|---|---|
| $S_{16} = h_{10} \cdot S_{00}^* + h_{11} \cdot S_{10}^*$ | (+1+1) | (+1+1) | $S_{24} = h_{10} \cdot S_{02}^* + h_{11} \cdot S_{10}^*$ | (-1+1) | (+1+1) |
| $S_{17} = h_{10} \cdot S_{00}^* + h_{11} \cdot S_{11}^*$ | (+1+1) | (+1-1) | $S_{25} = h_{10} \cdot S_{02}^* + h_{11} \cdot S_{11}^*$ | (-1+1) | (+1-1) |
| $S_{18} = h_{10} \cdot S_{00}^* + h_{11} \cdot S_{12}^*$ | (+1+1) | (-1+1) | $S_{26} = h_{10} \cdot S_{02}^* + h_{11} \cdot S_{12}^*$ | (-1+1) | (-1+1) |
| $S_{19} = h_{10} \cdot S_{00}^* + h_{11} \cdot S_{13}^*$ | (+1+1) | (-1-1) | $S_{27} = h_{10} \cdot S_{02}^* + h_{11} \cdot S_{13}^*$ | (-1+1) | (-1-1) |
| $S_{20} = h_{10} \cdot S_{01}^* + h_{11} \cdot S_{10}^*$ | (+1-1) | (+1+1) | $S_{28} = h_{10} \cdot S_{03}^* + h_{11} \cdot S_{10}^*$ | (-1-1) | (+1+1) |
| $S_{21} = h_{10} \cdot S_{01}^* + h_{11} \cdot S_{11}^*$ | (+1-1) | (+1-1) | $S_{29} = h_{10} \cdot S_{03}^* + h_{11} \cdot S_{11}^*$ | (-1-1) | (+1-1) |
| $S_{22} = h_{10} \cdot S_{01}^* + h_{11} \cdot S_{12}^*$ | (+1-1) | (-1+1) | $S_{30} = h_{10} \cdot S_{03}^* + h_{11} \cdot S_{12}^*$ | (-1-1) | (-1+1) |
| $S_{23} = h_{10} \cdot S_{01}^* + h_{11} \cdot S_{13}^*$ | (+1-1) | (-1-1) | $S_{31} = h_{10} \cdot S_{03}^* + h_{11} \cdot S_{13}^*$ | (-1-1) | (-1-1) |

(a) Determination of the real part $d_{Re}$=Re($D_0$) of the symbol Do received by the first receiver REC0

From Fig. 2, the posterior probability that the ith receiver will receive signal $S_j$, using Bayes' mixed rule, is given by the following equation.

$$P_i[d_{Re}/y(t)] = P_i[S_j/y(t)] = \frac{P_a(S_j)\cdot P(y(t)/S_j)}{P(y(t))} \cong k_0 \cdot P_a(S_j)\cdot \exp\left\{-\frac{1}{N_0}\int_0^T [y_0(t)-S_j]^2\,dt\right\} \quad (7)$$

Here $k_0$ is a normalization factor, j is the signal number, with j=0,1,2,...,15, y(t) is the signal synthesized from the signal train and the Gaussian white noise n(t) having spectral power intensity No ($y(t)=S_j+n(t)$), $P_i(S_j/y(t))$ is the posterior probability of receiving signal $S_j(t)$ in the ith receiver (the probability that the received signal y(t) is $S_j(t)$), $P_i(d_{Re}/y(t))$ is the posterior probability of receiving $d_{Re}$ in the ith receiver (the probability that the received signal y(t) is $d_{Re}$), $P_a(S_j)$ is the prior probability that a transmitted/received signal is $S_j(t)$, $P(y(t)/S_j)$ is a conditional probability, which is the probability, when a received word is y(t), that the sent code word was $S_j$, and P(y(t)) is the probability that y(t) is received.

The probability P(y(t)) in equation (7) is common to all decision candidates, and so can be ignored. What is necessary for decision of received information is discovery of candidate information signals which maximize the numerator or the right side of equation (7).

From Table 2, the probabilities that the first receiver REC0 receives $d_{Re}$=+1 and $d_{Re}$=-1 are given, respectively, by

$$P(d_{Re}=+1) = P_a(S_0)P(S_0)+P_a(S_1)P(S_1)+P_a(S_2)P(S_2)+P_a(S_3)P(S_3)+ P_a(S_4)P(S_4)+P_a(S_5)P(S_5)+P_a(S_6)P(S_6)+P_a(S_7)P(S_7) \quad (8)$$

$$P(d_{Re}=-1) = P_a(S_8)P(S_8)+P_a(S_9)P(S_9)+P_a(S_{10})P(S_{10})+P_a(S_{11})P(S_{11})+ P_a(S_{12})P(S_{12})+P_a(S_{13})P(S_{13})+P_a(S_{14})P(S_{14})+P_a(S_{15})P(S_{15}) \quad (8)'$$

In equations (7), (8) and (8)', $P_a(S_j)$ is the prior probability of receiving $S_j(t)$, and $P_i(S_{j/y}(t))$ is the posterior probability of receiving the signal $S_j(t)$ in the ith receiver (the probability that the received signal y(t) is $S_j(t)$); from Table 2, the prior probability $P_a(S_j)$ (j=0,1,2,...,15) is as given below.

$$\begin{aligned}
P_a(S_0) &= P_0(+1+1)P_1(+1+1) & P_a(S_4) &= P_0(+1-1)P_1(+1+1)\\
P_a(S_1) &= P_0(+1+1)P_1(+1-1) & P_a(S_5) &= P_0(+1-1)P_1(+1-1)\\
P_a(S_2) &= P_0(+1+1)P_1(-1+1) & P_a(S_6) &= P_0(+1-1)P_1(-1+1)\\
P_a(S_3) &= P_0(+1+1)P_1(-1-1) & P_a(S_7) &= P_0(+1-1)P_1(-1-1)\\
P_a(S_8) &= P_0(-1+1)P_1(+1+1) & P_a(S_{12}) &= P_0(-1-1)P_1(+1+1)\\
P_a(S_9) &= P_0(-1+1)P_1(+1-1) & P_a(S_{13}) &= P_0(-1-1)P_1(+1-1)\\
P_a(S_{10}) &= P_0(-1+1)P_1(-1+1) & P_a(S_{14}) &= P_0(-1-1)P_1(-1+1)\\
P_a(S_{11}) &= P_0(-1+1)P_1(-1-1) & P_a(S_{15}) &= P_0(-1-1)P_1(-1-1)
\end{aligned} \quad (9)$$

In the above equation, the index of P indicates the number of the transmitter, and is 0 or 1. Substituting equation (9) into equations (8) and (8)', the probabilities that the first receiver REC0 receives $d_{Re}$=+1 and $d_{Re}$=-1 are respectively

$$\begin{aligned} &P(d_{Re} = +1) = \\ &P_0(+1+1)\{P_1(+1+1)P(S_0) + P_1(+1-1)P(S_1) + P_1(-1+1)P(S_2) + P_1(-1-1)P(S_3)\} + \\ &P_0(+1-1)\{P_1(+1+1)P(S_4) + P(+1-1)P(S_5) + P_1(-1+1)P(S_6) + P_1(-1-1)P(S_7)\} \end{aligned} \quad (10)$$

$$\begin{aligned} &P(d_{Re} = -1) = \\ &P_0(-1+1)\{P_1(+1+1)P(S_8) + P_1(+1-1)P(S_9) + P_1(-1+1)P(S_{10}) + P_1(-1-1)P(S_{11})\} + \\ &P_0(-1-1)\{P_1(+1+1)P(S_{12}) + P(+1-1)P(S_{13}) + P_1(-1+1)P(S_{14}) + P_1(-1-1)P(S_{15})\} \end{aligned} \quad (11)$$

The sign of the real part $d_{Re}$ of a received information symbol can be determined from the result of comparing prior probabilities, or from comparison of their logarithm with a threshold. That is, by comparing the magnitudes of the probabilities that the real part $d_{Re}$ of a received information symbol is 1 and 0, or by comparing the difference in the logarithms thereof with a threshold, the sign (0 or 1) of the real part $d_{Re}$ of the received information symbol can be determined. Thus the sign of the real part $d_{Re}$ of the received information symbol is determined by

$$\frac{P(d_{Re} = +1/y(t))}{P(d_{Re} = -1/y(t))} \gtrless 1$$

or

$$\ln P(d_{Re} = +1/y(t)) - \ln P(d_{Re} = -1/y(t)) \gtrless 0 \quad (12)$$

Equation (12) is a determination rule (decision rule) for determining the sign of the real part $d_{Re}$ of the received information symbol.

Here,

$$\ln\{\exp(A) + \exp(B) + \exp(C) + \exp(D)\} = Lin + NLin \quad (13)$$

obtains, where,

$$Lin = 0.25[(A+B) + (C+D)] + \ln(2) +$$

$$0.5[\ln\{\cosh[0.5(A-B)]\} + \ln\{\cosh[0.5(C-D)]\}] + \ln(2) \quad (13a)$$

$$Arg = 0.25[(A+B)-(C+D)] + 0.5[\ln\{\cosh[0.5(A-B)]\} - \ln\{\cosh[0.5(C-D)]\}] \tag{13b}$$

$$NLin = \ln\{\cosh[0.5Arg]\} \tag{13c}$$

In consideration of the algebraic identity of the following equation,

$$\ln\ (e^X + e^Y) = \frac{X+Y}{2} + \ln\ 2 + \ln\ \cosh(\frac{X-Y}{2}) \tag{13d}$$

equation (10) can be rewritten as

$$\begin{aligned} &P(d_{Re} = +1) = \\ &P_0(+1+1)\{P_1(+1+1)P(S_0) + P_1(+1-1)P(S_1) + P_1(-1+1)P(S_2) + P_1(-1-1)P(S_3)\} + \\ &P_0(+1-1)\{P_1(+1+1)P(S_4) + P(+1-1)P(S_5) + P_1(-1+1)P(S_6) + P_1(-1-1)P(S_7)\} \end{aligned} \tag{13e}$$

and

$$\begin{aligned} &\ln\{P(d_{Re} = +1)\} = \\ &0.5(\ln P_0(+1+1) + \ln(P_1(+1+1)P(S_0) + P_1(+1-1)P(S_1) + P_1(-1+1)P(S_2) + P_1(-1-1)P(S_3))) + \\ &0.5(\ln P_0(+1-1) + \ln(P_1(+1+1)P(S_4) + P_1(+1-1)P(S_5) + P_1(-1+1)P(S_6) + P_1(-1-1)P(S_7))) + \\ &\ln\left\{\cosh\begin{bmatrix} 0.5(\ln P_0(+1+1) + \ln(P_1(+1+1)P(S_0) + P_1(+1-1)P(S_1) + P_1(-1+1)P(S_2) + P_1(-1-1)P(S_3))) - \\ 0.5(\ln P_0(+1-1) + \ln(P_1(+1+1)P(S_4) + P_1(+1-1)P(S_5) + P_1(-1+1)P(S_6) + P_1(-1-1)P(S_7))) \end{bmatrix}\right\} \end{aligned} \tag{13f}$$

Further,

$$\ln P_0(+1+1) - \ln P_0(+1-1) = \ln P_0(Q=+1) - \ln P_0(Q=-1) = \Delta \ln P_0(Q) \tag{13g}$$

Similarly rewriting equation (11) gives

$$P(d_{Re} = -1) =$$
$$P_0(-1+1)\{P_1(+1+1)P(S_8) + P_1(+1-1)P(S_9) + P_1(-1+1)P(S_{10}) + P_1(+1+1)P(S_{11})\} +$$
$$P_0(+1-1)\{P_1(+1+1)P(S_{12}) + P(+1-1)P(S_{13}) + P_1(-1+1)P(S_{14}) + P_1(-1-1)P(S_{15})\} \quad (13h)$$

Further,

$$\ln\{P(d_{Re} = -1)\} =$$
$$0.5(\ln P_0(+1+1) + \ln(P_1(+1+1)P(S_8) + P_1(+1-1)P(S_9) + P_1(-1+1)P(S_{10}) + P_1(-1-1)P(S_{11}))) +$$
$$0.5(\ln P_0(+1-1) + \ln(P_1(+1+1)P(S_{12}) + P_1(+1-1)P(S_{13}) + P_1(-1+1)P(S_{14}) + P_1(-1-1)P(S_{15}))) +$$
$$\ln\left\{\cosh\left[\begin{matrix}0.5(\ln P_0(+1+1) + \ln(P_1(+1+1)P(S_8) + P_1(+1-1)P(S_9) + P_1(-1+1)P(S_{10}) + P_1(-1-1)P(S_{11}))) - \\ 0.5(\ln P_0(+1-1) + \ln(P_1(+1+1)P(S_{12}) + P_1(+1-1)P(S_{13}) + P_1(-1+1)P(S_{14}) + P_1(-1-1)P(S_{15})))\end{matrix}\right]\right\} \quad (13i)$$

Also,

$$\ln P_0(+1+1) - \ln P_0(+1-1) = \ln P_0(Q = +1) - \ln P_0(Q = -1) = \Delta \ln P_0(Q) \quad (13j)$$

Here, if it is assumed that

$$P_0(+1+1)P(S_0) = A, \qquad P_0(+1-1)P(S_1) = B,$$
$$P_0(-1+1)P(S_2) = C, \qquad P_0(-1-1)P(S_3) = D \quad (13k)$$

then the following obtains for the first member of equation (10):

$$
\begin{aligned}
&(\ln(P_0(+1+1)P(S_0)+P_0(+1-1)P(S_1)+P_0(-1+1)P(S_2)+P_0(-1-1)P(S_3)))=\\
&0.25(\ln P_0(+1+1)+\ln P(S_0)+\ln P_0(+1-1)+\ln P(S_1)+\ln P_0(-1+1)+\ln P(S_2)+\ln P_0(-1-1)+\ln P(S_3))+\\
&\ln 2+\\
&0.5(\ln\{\cosh[0.5(\ln P_0(+1+1)+\ln P(S_0)-\ln P_0(+1-1)-\ln P(S_1))]\})+\\
&\quad 0.5(\ln\{\cosh[0.5(\ln P_0(-1+1)+\ln P(S_2)-\ln P_0(-1-1)-\ln P(S_3))]\})+\ln 2+\\
&\quad \ln\left\{\cosh\left[0.5\left(\begin{array}{l}0.25\begin{pmatrix}\ln P_0(+1+1)+\ln P(S_0)+\ln P_0(+1-1)+\ln P(S_1)-\\ \ln P_0(-1+1)-\ln P(S_2)-\ln P_0((-1-1)-\ln P(S_3)\end{pmatrix}+\\ 0.5(\ln\{\cosh[0.5(\ln P_0(+1+1)+\ln P(S_0)-\ln P_0(+1-1)-\ln P(S_1))]\})-\\ 0.5(\ln\{\cosh[0.5(\ln P_0(-1+1)+\ln P(S_2)-\ln P_0(-1-1)-\ln P(S_3))]\})\end{array}\right)\right]\right\}
\end{aligned}
\tag{13m}
$$

Further, upon taking into account

$$\ln P_0(+1+1)-\ln P_0(+1-1)=\ln P_0(Q=+1)-\ln P_0(Q=-1)=\Delta\ln P_0(Q) \tag{13n}$$

$$\ln P_0(-1+1)-\ln P_0(-1-1)=\ln P_0(Q=+1)-\ln P_0(Q=-1)=\Delta\ln P_0(Q) \tag{13p}$$

the above equations can be expressed as follows.

$$
\begin{aligned}
&(\ln(P_0(+1+1)P(S_0)+P_0(+1-1)P(S_1)+P_0(-1+1)P(S_2)+P_0(-1-1)P(S_3)))=\\
&0.25(\ln P_0(+1+1)+\ln P(S_0)+\ln P_0(+1-1)+\ln P(S_1)+\ln P_0(-1+1)+\ln P(S_2)+\ln P_0(-1-1)+\ln P(S_3))+\\
&\quad \ln 2+\\
&\quad 0.5(\ln\{\cosh[0.5(\Delta\ln P_0(Q)+\ln P(S_0)-\ln P(S_1))]\})+\\
&\quad 0.5(\ln\{\cosh[0.5(\Delta\ln P_0(Q)+\ln P(S_2)-\ln P(S_3))]\})+\ln 2+\\
&\quad \ln\left\{\cosh\left[0.5\left(\begin{array}{l}0.25(\ln P(S_0)+\ln P(S_1)-\ln P(S_2)-\ln P(S_3))+\\ 0.5(\ln\{\cosh[0.5(\Delta\ln P_0(Q)+\ln P(S_0)-\ln P(S_1))]\})-\\ 0.5(\ln\{\cosh[0.5(\Delta\ln P_0(Q)+\ln P(S_2)-\ln P(S_3))]\})\end{array}\right)\right]\right\}
\end{aligned}
\tag{13q}
$$

The following equation obtains,

$$P[S_i] = \exp\left\{-\frac{1}{N_0}\int_0^T [y_0(t) - S_i]^2 dt\right\} = \exp\left\{-\frac{1}{N_0}\left[y_0^2(t) - 2\,\mathrm{Re}\left\{y_0(t)(S_i^*)^*\right\} + \left|S_i^*\right|^2\right]\right\} \tag{13r}$$

and moreover

$$S_0 = h_{00} \cdot S_{00}^* + h_{01} \cdot S_{10}^* \ ; \ S_1 = h_{00} \cdot S_{00}^* + h_{01} \cdot S_{11}^* \ ;$$

$$S_2 = h_{00} \cdot S_{00}^* + h_{01} \cdot S_{12}^* \ ; \ S_3 = h_{00} \cdot S_{00}^* + h_{01} \cdot S_{13}^* \tag{13s}$$

Hence in equation (13q), each of the terms on the left of the following equation are given on the right side.

$$\ln P(S_0) - \ln P(S_1) = 4\,\mathrm{Im}\{y(t)h_{01}^*\} - 4\,\mathrm{Im}\{h_{00}S_{00}^*h_{01}^*\} \tag{13t}$$

$$\ln P(S_2) - \ln P(S_3) = 4\,\mathrm{Im}\{y(t)h_{01}^*\} - 4\,\mathrm{Im}\{h_{00}S_{00}^*h_{01}^*\} \tag{13u}$$

$$\ln P(S_0) + \ln P(S_1) - \ln P(S_2) - \ln P(S_3) = 2\left(4\,\mathrm{Re}\{y(t)h_{01}^*\} - 4\,\mathrm{Re}\{y(t)h_{00}S_{00}^*h_{01}^*\}\right) \tag{13v}$$

The following are then assumed for the second member of equation (10) and the first and second members of equation (11):

$$P_0(+1+1)P(S_4) = A, \quad P_0(+1-1)P(S_5) = B, \quad P_0(-1+1)P(S_6) = C, \quad P_0(-1-1)P(S_7) = D \tag{13w}$$

$$P_0(+1+1)P(S_8) = A, \quad P_0(+1-1)P(S_9) = B, \quad P_0(-1+1)P(S_{10}) = C, \quad P_0(-1-1)P(S_{11}) = D \tag{13x}$$

$$P_0(+1+1)P(S_{12}) = A, \quad P_0(+1-1)P(S_{13}) = B, \quad P_0(-1+1)P(S_{14}) = C, \quad P_0(-1-1)P(S_{15}) = D \tag{13y}$$

and processing similar to the above is performed. Upon substituting the results thus obtained into equations (13f) and (13i), and calculating $\ln P(d_{Re}=+1/y(t))$ and $\ln P(d_{Re}=-1/y(t))$ in equation (12), equations (14a) to (14i) are obtained.

$$\begin{aligned}&\ln P(d_{\mathrm{Re}} = +1/y(t)) - \ln P(d_{\mathrm{Re}} = -1/y(t)) = \Delta \ln P_{RECO}(0,I) = \\ &4\,\mathrm{Re}(y_0(t)h_{00}^{*}) + 0.5(L_1 - L_2 + L_3 + L_4) + \ln ch\{0.5(f_1 + f_2)\} - \ln ch\{0.5(f_3 + f_4)\}\end{aligned} \quad (14a)$$

$$L_1 = \begin{pmatrix}\ln ch\{0.5(4\,\mathrm{Im}(y_0(t)h_{01}^{*}) + \Delta \ln P_1(Q) - (4\,\mathrm{Re}(h_{00}h_{01}^{*}) + 4\,\mathrm{Im}(h_{00}h_{01}^{*})))\} - \\ \ln ch\{0.5(4\,\mathrm{Im}(y_0(t)h_{01}^{*}) + \Delta \ln P_1(Q) + (4\,\mathrm{Re}(h_{00}h_{01}^{*}) + 4\,\mathrm{Im}(h_{00}h_{01}^{*})))\}\end{pmatrix} \quad (14b)$$

$$L_2 = \begin{pmatrix}\ln ch\{0.5(4\,\mathrm{Im}(y_0(t)h_{01}^{*}) + \Delta \ln P_1(Q) - (4\,\mathrm{Re}(h_{00}h_{01}^{*}) - 4\,\mathrm{Im}(h_{00}h_{01}^{*})))\} - \\ \ln ch\{0.5(4\,\mathrm{Im}(y_0(t)h_{01}^{*}) + \Delta \ln P_1(Q) + (4\,\mathrm{Re}(h_{00}h_{01}^{*}) - 4\,\mathrm{Im}(h_{00}h_{01}^{*})))\}\end{pmatrix} \quad (14c)$$

$$L_3 = \begin{pmatrix}\ln ch\{0.5(4\,\mathrm{Re}(y_0(t)h_{01}^{*}) + \Delta \ln P_1(I) - (4\,\mathrm{Re}(h_{00}h_{01}^{*}) - 4\,\mathrm{Im}(h_{00}h_{01}^{*})))\} - \\ \ln ch\{0.5(4\,\mathrm{Re}(y_0(t)h_{01}^{*}) + \Delta \ln P_1(I) + (4\,\mathrm{Re}(h_{00}h_{01}^{*}) - 4\,\mathrm{Im}(h_{00}h_{01}^{*})))\}\end{pmatrix} \quad (14d)$$

$$L_4 = \begin{pmatrix}\ln ch\{0.5(4\,\mathrm{Re}(y_0(t)h_{01}^{*}) + \Delta \ln P_1(I) - (4\,\mathrm{Re}(h_{00}h_{01}^{*}) + 4\,\mathrm{Im}(h_{00}h_{01}^{*})))\} - \\ \ln ch\{0.5(4\,\mathrm{Re}(y_0(t)h_{01}^{*}) + \Delta \ln P_1(I) + (4\,\mathrm{Re}(h_{00}h_{01}^{*}) + 4\,\mathrm{Im}(h_{00}h_{01}^{*})))\}\end{pmatrix} \quad (14e)$$

$$f_1 = \begin{pmatrix}\ln ch\{0.5(4\,\mathrm{Im}(y_0(t)h_{01}^{*}) + \Delta \ln P_1(Q) - (4\,\mathrm{Im}(h_{00}h_{01}^{*}) + 4\,\mathrm{Re}(h_{00}h_{01}^{*})))\} - \\ \ln ch\{0.5(4\,\mathrm{Im}(y_0(t)h_{01}^{*}) + \Delta \ln P_1(Q) + (4\,\mathrm{Re}(h_{00}h_{01}^{*}) - 4\,\mathrm{Im}(h_{00}h_{01}^{*})))\}\end{pmatrix} \quad (14f)$$

$$f_2 = \begin{pmatrix}\ln ch\{0.5(4\,\mathrm{Re}(y_0(t)h_{01}^{*}) + \Delta \ln P_1(I) + (4\,\mathrm{Im}(h_{00}h_{01}^{*}) - 4\,\mathrm{Re}(h_{00}h_{01}^{*})))\} - \\ \ln ch\{0.5(4\,\mathrm{Re}(y_0(t)h_{01}^{*}) + \Delta \ln P_1(I) - (4\,\mathrm{Im}(h_{00}h_{01}^{*}) + 4\,\mathrm{Re}(h_{00}h_{01}^{*})))\}\end{pmatrix} \quad (14g)$$

$$f_3 = \begin{pmatrix}\ln ch\{0.5(4\,\mathrm{Im}(y_0(t)h_{01}^{*}) + \Delta \ln P_1(Q) - (4\,\mathrm{Re}(h_{00}h_{01}^{*}) - 4\,\mathrm{Im}(h_{00}h_{01}^{*})))\} - \\ \ln ch\{0.5(4\,\mathrm{Im}(y_0(t)h_{01}^{*}) + \Delta \ln P_1(Q) + (4\,\mathrm{Re}(h_{00}h_{01}^{*}) + 4\,\mathrm{Im}(h_{00}h_{01}^{*})))\}\end{pmatrix} \quad (14h)$$

$$f_4 = \begin{pmatrix}\ln ch\{0.5(4\,\mathrm{Re}(y_0(t)h_{01}^{*}) + \Delta \ln P_1(I) + (4\,\mathrm{Re}(h_{00}h_{01}^{*}) + 4\,\mathrm{Im}(h_{00}h_{01}^{*})))\} - \\ \ln ch\{0.5(4\,\mathrm{Re}(y_0(t)h_{01}^{*}) + \Delta \ln P_1(I) - (4\,\mathrm{Im}(h_{00}h_{01}^{*}) - 4\,\mathrm{Re}(h_{00}h_{01}^{*})))\}\end{pmatrix} \quad (14i)$$

In the above equations, the ln of ln ch indicates the natural logarithm, and ch denotes cosh (the hyperbolic cosine).

The nonlinear functions having the following pattern in equations (14a) to (14i),

$$F(x,\Delta E) = \ln\cosh\left\{\frac{x-\Delta E}{2}\right\} - \ln\cosh\left\{\frac{x+\Delta E}{2}\right\} \quad (15)$$

can be written as limiters having a linear region. The limiter level of the nonlinear function depends on the S/N ratio (the ratio of the signal to the noise spectral power intensity $N_0$) and the energy difference ΔE. Fig. 4 shows transfer functions for a nonlinear function F(x,ΔE) when the energy difference ΔE is taken as a parameter.

Here, new notation is introduced. The first notation is

$$S_0 = \mathrm{Re}\{k \cdot y_0 \cdot h_{00}^*\}, \quad S_2 = \mathrm{Re}\{k \cdot y_0 \cdot h_{01}^*\}$$

$$S_1 = \mathrm{Im}\{k \cdot y_0 \cdot h_{01}^*\}, \quad S_3 = \mathrm{Im}\{k \cdot y_0 \cdot h_{00}^*\} \quad (16)$$

In this notation, the signals S0, S3 can be calculated by a multiplier 1 which multiplies the received signal $y_0$ by $k \cdot h_{00}^*$, a real part extraction portion 2 which extracts the real part from the multiplication result, and an imaginary part extraction portion 3 which extracts the imaginary part, as shown in (A) of Fig. 5. Further, as shown in (B) of Fig. 5, the signals S1, S2 can be calculated by a multiplier 4 which multiplies the received signal $y_0$ by $k \cdot h_{01}^*$, an imaginary part extraction portion 5 which extracts the imaginary part of the multiplication result, and a real part extraction portion 6 which extracts the real part.

The second notation is

$$\mathrm{Im}\,\Delta E = \mathrm{Im}(k \cdot h_{00} \cdot h_{01}^*), \quad \mathrm{Re}\,\Delta E = \mathrm{Re}(k \cdot h_{00} \cdot h_{01}^*),$$

$$\Delta E_0 = \mathrm{Re}\,\Delta E + \mathrm{Im}\,\Delta E, \quad \Delta E_1 = \mathrm{Re}\,\Delta E - \mathrm{Im}\,\Delta E \quad (17)$$

Fig. 6 shows a computation circuit which computes the difference $\Delta\ln P_{REC0}(0,I)$ based on equation (14a); the difference $\Delta \ln P_{REC0}(0,I)$ between the probabilities that the real part of the symbol Do is +1 and is -1 is calculated based on the signal $y_0(t)$ input to the first receiver REC0. Here, the normalization factor k is taken to be $4/N_0$ (where No is the spectral intensity of Gaussian noise).

The computation circuit of Fig. 6 is fabricated in consideration of the notation of equations (16) and (17) above and the nonlinear function of equation (15); in blocks 7 and 8, 7a to 7d and 8a to 8e indicate limiters having prescribed energy differences.

Block 7 calculates the second term on the right side of equation (14a), $(L_1-L_2+L_3+L_4)$, block 8 calculates the first, third and fourth terms on the right side of equation (14a), and the adder 9 calculates and outputs $\Delta\ln P_{REC0}(0,I) = \{\ln P(d_{Re}=+1/y(t)) - \ln P(d_{Re}=-1/y(t))\}$.

In Fig. 6, it should be noted that in the blocks 7 and 8, the adders 7e, 7f, 8f, 8g add $\Delta\ln P_1(I)$ and $\Delta\ln P_1(Q)$, and the adder 8p adds $\Delta \ln P_0(Q)$. $\Delta\ln P_1(I)$ is the difference in probabilities that the real part of the symbol $D_1$ is +1 and is -1; $\Delta\ln P_1(Q)$ is the difference in probabilities that the imaginary part of the symbol $D_1$ is +1 and is -1; and when deciding the real part of the first symbol Do, the posterior estimate of the second symbol $D_1$ is used to perform refinement. Further, $\Delta\ln P_0(Q)$ is the difference in probabilities that the imaginary part of the first symbol Do is +1 and is -1, and when deciding the real part of the first symbol Do, the posterior estimate of the first symbol Do is used to perform refinement.

In block 7, 7g denotes a subtracter, 7h to 7i denote adders, and 7j denotes a multiplier; in block 8, 8h to 8i denote subtracters and 8j to 8p denote adders.

(b) Estimation of the real part $d_{Re}=\mathrm{Re}(D_0)$ of the symbol Do received by the second receiver REC1

Similarly to equations (14a) to (14i), equations for estimating the real part $d_{Re}=\mathrm{Re}(D_0)$ of a symbol Do received by the second receiver REC1 can easily be derived. That is, from Table 2 and Table 3, a decision table for the real part $d_{Re}=\mathrm{Re}(D_0)$ of a symbol Do received by the second receiver REC1 is as follows.

$$\ln P(d_{\mathrm{Re}} = +1/y(t)) - \ln P(d_{\mathrm{Re}} = -1/y(t)) = \Delta \ln P_{REC1}(0,I) = 4\,\mathrm{Re}(y_1(t)h_{10}^{*}) + 0.5(L_1 - L_2 + L_3 + L_4) + \ln ch\{0.5(f_1 + f_2)\} - \ln ch\{0.5(f_3 + f_4)\} \tag{18a}$$

$$L_1 = \begin{pmatrix} \ln ch\{0.5(4\,\mathrm{Im}(y_1(t)h_{11}^{*}) + \Delta \ln P_0(Q) - (4\,\mathrm{Re}(h_{10}h_{11}^{*}) + 4\,\mathrm{Im}(h_{10}h_{11}^{*})))\} - \\ \ln ch\{0.5(4\,\mathrm{Im}(y_1(t)h_{11}^{*}) + \Delta \ln P_0(Q) + (4\,\mathrm{Re}(h_{10}h_{11}^{*}) + 4\,\mathrm{Im}(h_{10}h_{11}^{*})))\} \end{pmatrix} \tag{18b}$$

$$L_2 = \begin{pmatrix} \ln ch\{0.5(4\,\mathrm{Im}(y(t)h_{01}^{*}) + \Delta \ln P_0(Q) - (4\,\mathrm{Re}(h_{00}h_{01}^{*}) - 4\,\mathrm{Im}(h_{00}h_{01}^{*})))\} - \\ \ln ch\{0.5(4\,\mathrm{Im}(y(t)h_{01}^{*}) + \Delta \ln P_0(Q) + (4\,\mathrm{Re}(h_{00}h_{01}^{*}) - 4\,\mathrm{Im}(h_{00}h_{01}^{*})))\} \end{pmatrix} \tag{18c}$$

$$L_3 = \begin{pmatrix} \ln ch\{0.5(4\,\mathrm{Re}(y_1(t)h_{11}^{*}) + \Delta \ln P_0(I) - (4\,\mathrm{Re}(h_{10}h_{11}^{*}) - 4\,\mathrm{Im}(h_{10}h_{11}^{*})))\} - \\ \ln ch\{0.5(4\,\mathrm{Re}(y_1(t)h_{11}^{*}) + \Delta \ln P_0(I) + (4\,\mathrm{Re}(h_{10}h_{11}^{*}) - 4\,\mathrm{Im}(h_{10}h_{11}^{*})))\} \end{pmatrix} \tag{18d}$$

$$L_4 = \begin{pmatrix} \ln ch\{0.5(4\,\mathrm{Re}(y_1(t)h_{11}^{*}) + \Delta \ln P_0(I) - (4\,\mathrm{Re}(h_{10}h_{11}^{*}) + 4\,\mathrm{Im}(h_{10}h_{11}^{*})))\} - \\ \ln ch\{0.5(4\,\mathrm{Re}(y_1(t)h_{11}^{*}) + \Delta \ln P_0(I) + (4\,\mathrm{Re}(h_{10}h_{11}^{*}) + 4\,\mathrm{Im}(h_{10}h_{11}^{*})))\} \end{pmatrix} \tag{18e}$$

$$f_1 = \begin{pmatrix} \ln ch\{0.5(4\,\mathrm{Im}(y_1(t)h_{11}^{*}) + \Delta \ln P_0(Q) - (4\,\mathrm{Im}(h_{10}h_{11}^{*}) + 4\,\mathrm{Re}(h_{10}h_{11}^{*})))\} - \\ \ln ch\{0.5(4\,\mathrm{Im}(y_1(t)h_{11}^{*}) + \Delta \ln P_0(Q) + (4\,\mathrm{Re}(h_{10}h_{11}^{*}) - 4\,\mathrm{Im}(h_{10}h_{11}^{*})))\} \end{pmatrix} \tag{18f}$$

$$f_2 = \begin{pmatrix} \ln ch\{0.5(4\,\mathrm{Re}(y_1(t)h_{11}^{*}) + \Delta \ln P_0(I) - (4\,\mathrm{Re}(h_{10}h_{11}^{*}) - 4\,\mathrm{Im}(h_{10}h_{11}^{*})))\} - \\ \ln ch\{0.5(4\,\mathrm{Re}(y_1(t)h_{11}^{*}) + \Delta \ln P_0(I) - (4\,\mathrm{Im}(h_{10}h_{11}^{*}) + 4\,\mathrm{Re}(h_{10}h_{11}^{*})))\} \end{pmatrix} \tag{18g}$$

$$f_3 = \begin{pmatrix} \ln ch\{0.5(4\,\mathrm{Im}(y_1(t)h_{11}^{*}) + \Delta \ln P_0(Q) - (4\,\mathrm{Re}(h_{10}h_{11}^{*}) - 4\,\mathrm{Im}(h_{10}h_{11}^{*})))\} - \\ \ln ch\{0.5(4\,\mathrm{Im}(y_1(t)h_{11}^{*}) + \Delta \ln P_0(Q) + (4\,\mathrm{Re}(h_{10}h_{11}^{*}) + 4\,\mathrm{Im}(h_{10}h_{11}^{*})))\} \end{pmatrix} \tag{18h}$$

$$f_4 = \begin{pmatrix} \ln ch\{0.5(4\,\mathrm{Re}(y_1(t)h_{11}^{*}) + \Delta \ln P_0(I) + (4\,\mathrm{Re}(h_{10}h_{11}^{*}) + 4\,\mathrm{Im}(h_{10}h_{11}^{*})))\} - \\ \ln ch\{0.5(4\,\mathrm{Re}(y_1(t)h_{11}^{*}) + \Delta \ln P_0(I) + (4\,\mathrm{Re}(h_{10}h_{11}^{*}) - 4\,\mathrm{Im}(h_{10}h_{11}^{*})))\} \end{pmatrix} \tag{18i}$$

Here, the following new notation is introduced.

$$S0 = \mathrm{Re}\{k \cdot y_1 \cdot h_{10}^*\},\quad S1 = \mathrm{Im}\{k \cdot y_1 \cdot h_{11}^*\} S2 = \mathrm{Re}\{k \cdot y_1 \cdot h_{11}^*\},\quad S3 = \mathrm{Im}\{k \cdot y_1 \cdot h_{10}^*\}$$

$$\mathrm{Im}\,\Delta E = \mathrm{Im}(k \cdot h_{10} \cdot h_{11}^*),\quad \mathrm{Re}\,\Delta E = \mathrm{Re}(k \cdot h_{10} \cdot h_{11}^*),$$

$$\Delta E_0 = \mathrm{Re}\,\Delta E + \mathrm{Im}\,\Delta E\ ,\quad \Delta E_1 = \mathrm{Re}\,\Delta E - \mathrm{Im}\,\Delta E \qquad (19)$$

The signals S0, S3 in the above notation, can be calculated by a multiplier 11 which multiplies the received signal $y_1$ by $k \cdot h_{10}^*$, a real part extraction portion 12 which extracts the real part of the multiplication result, and an imaginary part extraction portion 13 which extracts the imaginary part, as indicated by (A) in Fig. 7. Further, signals S1, S2 can be calculated by a multiplier 14 which multiplies the received signal $y_1$ by $k \cdot h_{11}^*$, an imaginary part extraction portion 15 which extracts the imaginary part of the multiplication result, and a real part extraction portion 16 which extracts the real part, as indicated by (B) in Fig. 7.

Fig. 18 shows a computation circuit which computes $\Delta \ln P_{REC1}(0, I)$ based on equation (18a), using the input signal $y_1(t)$ of the second receiver REC1 to compute the difference in probabilities $\Delta \ln P_{REC1}(0, I)$ that the real part of the symbol Do is +1 and is -1. Here, the normalization factor k is set equal to $4/N_0$ (where No is the spectral intensity of Gaussian noise).

The computation circuit of Fig. 8 is fabricated in consideration of the notation of equation (19) above and the nonlinear function of equation (15); in blocks 17 and 18, 17a to 17d and 18a to 18e indicate the limiters of Fig. 4 having prescribed energy differences.

Block 17 calculates the second term on the right side of equation (18a), $(L_1-L_2+L_3+L_4)$ , block 18 calculates the first, third and fourth terms on the right side of equation (18a), and the adder 19 calculates and outputs $\Delta \ln P_{REC1}(0,I) = \{1nP(d_{Re}=+1/y(t)) - \ln P(d_{Re}=-1/y(t))\}$.

In Fig. 8 it should be noted that in blocks 17 and 18, the adders 17e, 17f, 18f, 18g add $\Delta \ln P_0(I)$ and $\Delta \ln P_0(Q)$, and that the adder 18p adds $\Delta \ln P_1(Q)$. $\Delta \ln P_0(I)$ is the difference in probabilities that the real part of the symbol Do is +1 and is -1; $\Delta \ln P_0(Q)$ is the difference in probabilities that the imaginary part of the symbol Do is +1 and is -1; and when deciding the real part of the first symbol Do, the posterior estimate of the first symbol Do is used to perform refinement. $\Delta \ln P_1(Q)$ is the difference in probabilities that the imaginary part of the second symbol $D_1$ is +1 and is -1; when deciding the real part of the first symbol Do, the posterior estimate of the second symbol $D_1$ is used to perform refinement.

In block 17, 17g denotes a subtracter, 17h and 17i denote adders, and 17j denotes a multiplier; in block 18, 18h and 18i denote subtracters, and 18j to 18p denote adders.

(c) Combination of $\Delta \ln P_{REC0}(0,I)$ and $\Delta \ln P_{REC1}(0,I)$

The sum of the estimate $\Delta \ln P_{REC0}(0,I)$ and the estimate $\Delta \ln P_{REC1}(0,I)$ calculated in the above (a) and (b) is the [difference in] probability values $\Delta \ln P_0(I)$ when the real part of the first symbol Do is +1 and is -1. Here, $\Delta \ln P_{REC0}(0,I)$ is the estimate computed from the signal $y_0(t)$ received by the first receiver REC0 (the difference in probabilities when the real part of the first symbol Do is +1 and is -1), and $\Delta \ln P_{REC1}(0,I)$ is the estimate computed from the signal $y_1(t)$ received by the second receiver REC1 (the difference in probabilities when the real part of the first symbol Do is +1 and is -1).

Fig. 9 shows the decision circuit for the real part of the first symbol $D_0$; the computation circuit 101, comprising the configuration of Fig. 6, outputs the estimate $\Delta \ln P_{REC0}(0,I)$, the computation circuit 102, comprising the configuration of Fig. 8, outputs the estimate $\Delta \ln P_{REC1}(0,I)$, the adder 103 adds the estimate $\Delta\ \ln P_{REC0}(0,I)$ and the estimate $\Delta \ln P_{REC1}(0,I)$ and outputs the synthesized estimate $\Delta \ln P_0(I)$, and the decision portion 104, based on the synthesized estimate $\Delta \ln P_0(I)$, decides whether the real part of the first symbol Do is +1 or -1, and outputs the decision result $d_{Re}=\mathrm{Re}(D_0)$.

When deciding the real part of the first symbol Do, this decision circuit uses the posterior estimates $\Delta\ \ln P_1(I)$, $\Delta\ \ln P_1(Q)$ of the real and imaginary parts of the second symbol $D_1$ to perform refinement, and also uses the posterior estimates $\Delta \ln P_0(I)$, $\Delta \ln P_0(Q)$ of the real and imaginary parts of the symbol itself Do to perform refinement.

(d) Turbo Algorithm

As is clear from equation (14a) and equation (18a), when determining the sign of the real part of the transmitted first symbol Do, decision information obtained previously for the first and second symbols is used. This decision infor-

mation is $\Delta\ \ln P_0(I)$, $\Delta \ln P_0 Q)$, $\Delta \ln P_1(I)$, $\Delta \ln P_1(Q)$ in the first symbol decision equations (14a) and (18a), and represent the difference in logarithms of the posterior probabilities (soft decisions) that the signs of the real and imaginary parts of the first and second symbols are "+" and "-". Because all calculations are performed serially, during processing according to equations (14a) and (18a), it is possible to perform iterative calculations adopting the latest posterior probabilities for the first and second symbols. The proposed algorithm is similar to well-known turbo decoder methods designed for use with turbo codes.

Because of the similarity with turbo decoders, the algorithm of this invention is called a turbo receiver. The famous injunction of Viterbi, to never discard information prematurely that may be useful in making a decision until after all decisions related to that information have been completed, is extremely well-suited to the turbo receiver of this invention.

Because all calculations are performed in order for each symbol, iterative calculations are performed adopting the most recent posterior probability estimates from adjacent channels. In a turbo decoder, each decoder passes information to other decoders, and uses information obtained from other decoders to refine posterior probabilities estimated in order. Similarly in the algorithm of this invention, information derived after nonlinear processing for one symbol is used in refining the posterior probabilities estimated for the other symbol, and information derived from the other symbol is used in refining the posterior probabilities estimated for the first symbol. As in an iterative turbo decoder, the algorithm of this invention performs iteration once or more before making a final decision for a received information symbol. In a turbo decoder, if individual decoder outputs are in the form of hard bit decisions (hard decisions), then there is only a slight advantage to sharing the information. However, in this invention, hard bit decisions are performed only in the final iteration.

(e) Decision of the real part $d_{Re}=\mathrm{Re}(D_1)$ of the second symbol $D_1$

In the above, decision of the real part $d_{Re}=\mathrm{Re}(D_0)$ of the first symbol Do was explained; by a similar procedure, a decision can be made for the real part $d_{Re}=\mathrm{Re}(D_1)$ of the second symbol $D_1$.

(e-1) Estimation of the real part $d_{Re}=\mathrm{Re}(D_1)$ of the symbol $D_1$ received by the first receiver REC0

The first receiver REC0 outputs an estimate $\Delta \ln P_{REC0}(1,I)$ of the real part $d_{Re}=\mathrm{Re}(D_1)$ of the second symbol $D_1$ according to an algorithm similar to the algorithm shown in Fig. 6. However,

$$S_0 = \mathrm{Re}\{k \cdot y_0 \cdot h_{01}^*\},\quad S_1 = \mathrm{Im}\{k \cdot y_0 \cdot h_{00}^*\}$$

$$S_2 = \mathrm{Re}\{k \cdot y_0 \cdot h_{00}^*\},\quad S_3 = \mathrm{Im}\{k \cdot y_0 \cdot h_{01}^*\} \qquad (20)$$

$$\mathrm{Im}\,\Delta E = \mathrm{Im}(k \cdot h_{01} \cdot h_{00}^*),\quad \mathrm{Re}\,\Delta E = \mathrm{Re}(k \cdot h_{01} \cdot h_{00}^*),$$

$$\Delta E_0 = \mathrm{Re}\,\Delta E + \mathrm{Im}\,\Delta E,\quad \Delta E_1 = \mathrm{Re}\,\Delta E - \mathrm{Im}\,\Delta E$$

(e-2) Estimation of the real part $d_{Re}=\mathrm{Re}(D_1)$ of the symbol $D_1$ received by the second receiver REC1

The second receiver REC1 outputs an estimate $\Delta \ln P_{REC1}(1,I)$ of the real part $d_{Re}=\mathrm{Re}(D_1)$ of the second symbol $D_1$ according to an algorithm similar to the algorithm shown in Fig. 8. However,

$$S_0 = \mathrm{Re}\{k \cdot y_1 \cdot h_{11}^*\},\quad S_1 = \mathrm{Im}\{k \cdot y_1 \cdot h_{10}^*\}$$

$$S_2 = \mathrm{Re}\{k \cdot y_1 \cdot h_{10}^*\},\quad S_3 = \mathrm{Im}\{k \cdot y_1 \cdot h_{11}^*\} \tag{21}$$

$$\mathrm{Im}\,\Delta E = \mathrm{Im}(k \cdot h_{11} \cdot h_{10}^*),\quad \mathrm{Re}\,\Delta E = \mathrm{Re}(k \cdot h_{11} \cdot h_{10}^*),$$

$$\Delta E_0 = \mathrm{Re}\,\Delta E + \mathrm{Im}\,\Delta E,\quad \Delta E_1 = \mathrm{Re}\,\Delta E - \mathrm{Im}\,\Delta E$$

The sum of the estimate $\Delta\ln P_{REC0}(1,I)$ and the estimate $\Delta\ln P_{REC1}(1, I)$ obtained in the above (e-1) and (e-2) is the estimate $\Delta\ln P_1(I)$ when the real part of the second symbol $D_1$ is +1 and when it is -1. Here, $\Delta\ln P_{REC0}(1,I)$ is the estimate determined from the signal $y_0(t)$ received by the first receiver REC0 (the difference in probabilities when the real part of the second symbol $D_1$ is +1 and when it is -1), and $\Delta\ln P_{REC1}(1,I)$ is the estimate determined from the signal $y_1(t)$ received by the second receiver REC1 (the difference in probabilities when the real part of the second symbol $D_1$ is +1 and when it is -1).

Fig. 10 shows the decision circuit for the real part of the second symbol $D_1$; the computation circuit 201 outputs the estimate $\Delta\ln P_{REC0}(1,I)$, the computation circuit 202 outputs the estimate $\Delta\ln P_{REC1}(1,I)$. the adder 203 adds the estimate $\Delta\ln P_{REC0}(1,I)$ and the estimate $\Delta\ln P_{REC1}(1,I)$ and outputs the synthesized estimate $\Delta\ln P_1(I)$, and based on the synthesized estimate $\Delta\ln P_1(I)$, the decision portion 204 judges whether the real part of the second symbol $D_1$ is +1 or -1, and outputs the decision result $d_{Re}=\mathrm{Re}(D_1)$.

When deciding the real part of the second symbol $D_1$, this decision circuit uses the posterior estimates $\Delta\ln P_0(I)$, $\Delta\ln P_0(Q)$ of the real and imaginary parts of the first symbol Do to perform refinement, and also uses the posterior estimates $\Delta\ln P_1(I)$, $\Delta\ln P_1(Q)$ of the real and imaginary parts of the symbol $D_1$ itself to perform refinement.

(f) Estimation of the imaginary part $d_{Im}=\mathrm{Im}(D_0)$ of the first symbol Do received by the first receiver REC0

Similarly to the case of the real part of the first symbol, from Table 2, the probabilities that the first receiver REC0 receives $d_{Im}$=+1 and $d_{Im}$=-1 are respectively

$$\begin{aligned}P(d_{Im} = +1) = {} & P_a(S_0)P(S_0) + P_a(S_1)P(S_1) + P_a(S_2)P(S_2) + P_a(S_3)P(S_3) + \\ & P_a(S_8)P(S_8) + P_a(S_9)P(S_9) + P_a(S_{10})P(S_{10}) + P_a(S_{11})P(S_{11})\end{aligned} \tag{22}$$

$$\begin{aligned}P(d_{Im} = -1) = {} & P_a(S_4)P(S_4) + P_a(S_5)P(S_5) + P_a(S_6)P(S_6) + P_a(S_7)P(S_7) + \\ & P_a(S_{12})P(S_{12}) + P_a(S_{13})P(S_{13}) + P_a(S_{14})P(S_{14}) + P_a(S_{15})P(S_{15})\end{aligned} \tag{22}'$$

Similarly to the real part, the decision rules to decide the sign of the imaginary part $d_{Im}$ of the first symbol are given by the following equations.

$$\begin{aligned}&\ln P(d_{Im} = +1/y_0(t)) - \ln P(d_{Im} = -1/y_0(t)) = \Delta\ln P_{REC0}(0,Q) = \\ &4\,\mathrm{Im}(y_0(t)h_{00}^*) + 0.5(L_1 + L_2 + L_3 - L_4) + \ln ch\{0.5(f_1 + f_2)\} - \ln ch\{0.5(f_3 + f_4)\}\end{aligned} \tag{23a}$$

$$L_1 = \begin{pmatrix} \ln ch\left\{0.5\left(4\,\mathrm{Im}\left(y_0(t)h_{01}^{*}\right) + \Delta \ln P_1(Q) - \left(4\,\mathrm{Im}\left(h_{00}h_{01}^{*}\right) + 4\,\mathrm{Re}\left(h_{00}h_{01}^{*}\right)\right)\right)\right\} - \\ \ln ch\left\{0.5\left(4\,\mathrm{Im}\left(y_0(t)h_{01}^{*}\right) + \Delta \ln P_1(Q) + \left(4\,\mathrm{Im}\left(h_{00}h_{01}^{*}\right) + 4\,\mathrm{Re}\left(h_{00}h_{01}^{*}\right)\right)\right)\right\} \end{pmatrix} \tag{23b}$$

$$L_2 = \begin{pmatrix} \ln ch\left\{0.5\left(4\,\mathrm{Im}\left(y_0(t)h_{01}^{*}\right) + \Delta \ln P_1(Q) - \left(4\,\mathrm{Re}\left(h_{00}h_{01}^{*}\right) - 4\,\mathrm{Im}\left(h_{00}h_{01}^{*}\right)\right)\right)\right\} - \\ \ln ch\left\{0.5\left(4\,\mathrm{Im}\left(y_0(t)h_{01}^{*}\right) + \Delta \ln P_1(Q) + \left(4\,\mathrm{Re}\left(h_{00}h_{01}^{*}\right) - 4\,\mathrm{Im}\left(h_{00}h_{01}^{*}\right)\right)\right)\right\} \end{pmatrix} \tag{23c}$$

$$L_3 = \begin{pmatrix} \ln ch\left\{0.5\left(4\,\mathrm{Re}\left(y_0(t)h_{01}^{*}\right) + \Delta \ln P_1(I) - \left(4\,\mathrm{Re}\left(h_{00}h_{01}^{*}\right) - 4\,\mathrm{Im}\left(h_{00}h_{01}^{*}\right)\right)\right)\right\} - \\ \ln ch\left\{0.5\left(4\,\mathrm{Re}\left(y_0(t)h_{01}^{*}\right) + \Delta \ln P_1(I) + \left(4\,\mathrm{Re}\left(h_{00}h_{01}^{*}\right) - 4\,\mathrm{Im}\left(h_{00}h_{01}^{*}\right)\right)\right)\right\} \end{pmatrix} \tag{23d}$$

$$L_4 = \begin{pmatrix} \ln ch\left\{0.5\left(4\,\mathrm{Re}\left(y_0(t)h_{01}^{*}\right) + \Delta \ln P_1(I) - \left(4\,\mathrm{Re}\left(h_{00}h_{01}^{*}\right) + 4\,\mathrm{Im}\left(h_{00}h_{01}^{*}\right)\right)\right)\right\} - \\ \ln ch\left\{0.5\left(4\,\mathrm{Re}\left(y_0(t)h_{01}^{*}\right) + \Delta \ln P_1(I) + \left(4\,\mathrm{Re}\left(h_{00}h_{01}^{*}\right) + 4\,\mathrm{Im}\left(h_{00}h_{01}^{*}\right)\right)\right)\right\} \end{pmatrix} \tag{23e}$$

$$f_1 = \begin{pmatrix} \ln ch\left\{0.5\left(4\,\mathrm{Im}\left(y_0(t)h_{01}^{*}\right) + \Delta \ln P_1(Q) - \left(4\,\mathrm{Re}\left(h_{00}h_{01}^{*}\right) + 4\,\mathrm{Im}\left(h_{00}h_{01}^{*}\right)\right)\right)\right\} - \\ \ln ch\left\{0.5\left(4\,\mathrm{Im}\left(y_0(t)h_{01}^{*}\right) + \Delta \ln P_1(Q) - \left(4\,\mathrm{Re}\left(h_{00}h_{01}^{*}\right) - 4\,\mathrm{Im}\left(h_{00}h_{01}^{*}\right)\right)\right)\right\} \end{pmatrix} \tag{23f}$$

$$f_2 = \begin{pmatrix} \ln ch\left\{0.5\left(4\,\mathrm{Re}\left(y_0(t)h_{01}^{*}\right) + \Delta \ln P_1(I) + \left(4\,\mathrm{Im}\left(h_{00}h_{01}^{*}\right) + 4\,\mathrm{Re}\left(h_{00}h_{01}^{*}\right)\right)\right)\right\} - \\ \ln ch\left\{0.5\left(4\,\mathrm{Re}\left(y_0(t)h_{01}^{*}\right) + \Delta \ln P_1(I) + \left(4\,\mathrm{Im}\left(h_{00}h_{01}^{*}\right) - 4\,\mathrm{Re}\left(h_{00}h_{01}^{*}\right)\right)\right)\right\} \end{pmatrix} \tag{23g}$$

$$f_3 = \begin{pmatrix} \ln ch\left\{0.5\left(4\,\mathrm{Im}\left(y_0(t)h_{01}^{*}\right) + \Delta \ln P_1(Q) + \left(4\,\mathrm{Re}\left(h_{00}h_{01}^{*}\right) - 4\,\mathrm{Im}\left(h_{00}h_{01}^{*}\right)\right)\right)\right\} - \\ \ln ch\left\{0.5\left(4\,\mathrm{Im}\left(y_0(t)h_{01}^{*}\right) + \Delta \ln P_1(Q) + \left(4\,\mathrm{Re}\left(h_{00}h_{01}^{*}\right) + 4\,\mathrm{Im}\left(h_{00}h_{01}^{*}\right)\right)\right)\right\} \end{pmatrix} \tag{23h}$$

$$f_4 = \begin{pmatrix} \ln ch\left\{0.5\left(4\,\mathrm{Re}\left(y_0(t)h_{01}^{*}\right) + \Delta \ln P_1(I) + \left(4\,\mathrm{Re}\left(h_{00}h_{01}^{*}\right) - 4\,\mathrm{Im}\left(h_{00}h_{01}^{*}\right)\right)\right)\right\} - \\ \ln ch\left\{0.5\left(4\,\mathrm{Re}\left(y_0(t)h_{01}^{*}\right) + \Delta \ln P_1(I) - \left(4\,\mathrm{Re}\left(h_{00}h_{01}^{*}\right) + 4\,\mathrm{Im}\left(h_{00}h_{01}^{*}\right)\right)\right)\right\} \end{pmatrix} \tag{23i}$$

Here, new notation is introduced. The first notation is

$$S_0 = \mathrm{Im}\{k \cdot y_0 \cdot h_{00}^{*}\}, \quad S_1 = \mathrm{Im}\{k \cdot y_0 \cdot h_{01}^{*}\},$$

$$S_2 = \mathrm{Re}\{k \cdot y_0 \cdot h_{01}^{*}\}, \quad S_3 = \mathrm{Re}\{k \cdot y_0 \cdot h_{00}^{*}\} \tag{24}$$

The signals S0, S3 in this notation can be calculated by the multiplier 21 which multiplies the received signal $y_0$ by $k \cdot h_{00}^*$, the imaginary part extraction portion 22 which extracts the imaginary part from the multiplication result, and the real part extraction portion 23 which extracts the real part, as shown in (A) of Fig. 11. And, the signals S1, S2 in this notation can be calculated by the multiplier 24 which multiplies the received signal $y_0$ by $k \cdot h_{01}^*$, the imaginary part extraction portion 25 which extracts the imaginary part from the multiplication result, and the real part extraction portion 26 which extracts the real part, as shown in (B) of Fig. 11.

The second notation is

$$\operatorname{Im}\Delta E = \operatorname{Im}\left(k \cdot h_{00} \cdot h_{01}^{*}\right), \quad \operatorname{Re}\Delta E = \operatorname{Re}\left(k \cdot h_{00} \cdot h_{01}^{*}\right),$$

$$\Delta E_0 = \operatorname{Re}\Delta E + \operatorname{Im}\Delta E\ , \quad \Delta E_1 = \operatorname{Re}\Delta E - \operatorname{Im}\Delta E \qquad (25)$$

Fig. 12 shows a computation circuit which, based on equation (23a), computes $\Delta \ln P_{REC0}(0,Q)$, computing the difference $\Delta \ln P_{REC0}(0,Q)$ in probabilities when the imaginary part of the symbol Do is +1 and is -1 from the signal $y_0(t)$ input to the first receiver REC0. However, the normalization factor k is taken to be $4/N_0$ (where No is the spectral intensity of Gaussian noise).

The computation circuit of Fig. 12 is fabricated in consideration of the notation of equations (24) and (25) above and the nonlinear function of equation (15); in blocks 27 and 28, 27a to 27d and 28a to 28e indicate limiters of Fig. 4 having prescribed energy differences.

Block 27 calculates the second term on the right side of equation (23a), $(L_1+L_2+L_3-L_4)$, block 28 calculates the first, third and fourth terms on the right side of equation (23a), and the adder 29 calculates and outputs $\Delta \ln P_{REC0}(0,Q) = \{\ln P(d_{Im}=+1/y(t))-\ln P(d_{Im}=-1/y(t))\}$.

In Fig. 12, it should be noted that in the blocks 27 and 28, the adders 27e, 27f, 28f, 28g add $\Delta \ln P_1(I)$ and $\Delta \ln P_1(Q)$, and the adder 28p adds $\Delta \ln P_0(I)$. $\Delta \ln P_1(I)$ is the difference in probabilities that the real part of the second symbol $D_1$ is +1 and is -1; $\Delta \ln P_1(Q)$ is the difference in probabilities that the imaginary part of the second symbol $D_1$ is +1 and is -1; and when deciding the imaginary part of the first symbol Do, the posterior estimate of the second symbol $D_1$ is used to perform refinement. Further, $\Delta \ln P_0(I)$ is the difference in probabilities that the real part of the first symbol Do is +1 and is -1, and when deciding the imaginary part of the first symbol Do, the posterior estimate of the first symbol Do is used to perform refinement.

In block 27, 27g denotes a subtracter, 27h to 27i denote adders, and 27j denotes a multiplier; in block 28, 28h to 28i denote subtracters and 28j to 28p denote adders. (g) Estimation of the imaginary part $d_{Im}=\operatorname{Im}(D_0)$ of the symbol Do received by the second receiver REC1 Similarly to equations (23a) to (23i), equations to estimate the imaginary part $d_{Im}=\operatorname{Im}(D_0)$ of the symbol Do received by the second receiver REC1 can easily be derived. That is, as is seen from Table 2 and Table 3, the decision rules for the imaginary part $d_{Im}=\operatorname{Im}(D_0)$ of the symbol $D_0$ received by the second receiver REC1 are as follows.

$$\begin{aligned}&\ln P(d_{Im} = +1/y_1(t)) - \ln P(d_{Im} = -1/y_1(t)) = \Delta \ln P_{REC1}(0,Q) = \\ &4\operatorname{Im}\left(y_1(t)h_{10}^{*}\right) + 0.5(L_1 + L_2 + L_3 - L_4) + \ln ch\{0.5(f_1 + f_2)\} - \ln ch\{0.5(f_3 + f_4)\}\end{aligned} \qquad (26a)$$

$$L_1 = \begin{pmatrix}\ln ch\{0.5(4\operatorname{Im}(y_1(t)h_{11}^{*}) + \Delta \ln P_0(Q) - (4\operatorname{Im}(h_{10}h_{11}^{*}) + 4\operatorname{Re}(h_{10}h_{11}^{*})))\} - \\ \ln ch\{0.5(4\operatorname{Im}(y_1(t)h_{11}^{*}) + \Delta \ln P_0(Q) + (4\operatorname{Im}(h_{10}h_{11}^{*}) + 4\operatorname{Re}(h_{10}h_{11}^{*})))\}\end{pmatrix} \qquad (26b)$$

$$L_2 = \begin{pmatrix}\ln ch\{0.5(4\operatorname{Im}(y_1(t)h_{11}^{*}) + \Delta \ln P_0(Q) - (4\operatorname{Re}(h_{10}h_{11}^{*}) - 4\operatorname{Im}(h_{10}h_{11}^{*})))\} - \\ \ln ch\{0.5(4\operatorname{Im}(y_1(t)h_{11}^{*}) + \Delta \ln P_0(Q) + (4\operatorname{Re}(h_{10}h_{11}^{*}) - 4\operatorname{Im}(h_{10}h_{11}^{*})))\}\end{pmatrix} \qquad (26c)$$

$$L_3 = \begin{pmatrix} \ln ch\{0.5(4\,\mathrm{Re}(y_1(t)h_{01}^*) + \Delta\ln P_0(I) - (4\,\mathrm{Re}(h_{10}h_{11}^*) - 4\,\mathrm{Im}(h_{10}h_{11}^*)))\} - \\ \ln ch\{0.5(4\,\mathrm{Re}(y_1(t)h_{01}^*) + \Delta\ln P_0(I) + (4\,\mathrm{Re}(h_{10}h_{11}^*) - 4\,\mathrm{Im}(h_{10}h_{11}^*)))\} \end{pmatrix} \quad (26d)$$

$$L_4 = \begin{pmatrix} \ln ch\{0.5(4\,\mathrm{Re}(y_1(t)h_{01}^*) + \Delta\ln P_0(I) - (4\,\mathrm{Re}(h_{10}h_{11}^*) + 4\,\mathrm{Im}(h_{10}h_{11}^*)))\} - \\ \ln ch\{0.5(4\,\mathrm{Re}(y_1(t)h_{01}^*) + \Delta\ln P_0(I) + (4\,\mathrm{Re}(h_{10}h_{11}^*) + 4\,\mathrm{Im}(h_{10}h_{11}^*)))\} \end{pmatrix} \quad (26e)$$

$$f_1 = \begin{pmatrix} \ln ch\{0.5(4\,\mathrm{Im}(y_1(t)h_{01}^*) + \Delta\ln P_0(Q) - (4\,\mathrm{Re}(h_{10}h_{11}^*) + 4\,\mathrm{Im}(h_{10}h_{11}^*)))\} - \\ \ln ch\{0.5(4\,\mathrm{Im}(y_1(t)h_{01}^*) + \Delta\ln P_0(Q) - (4\,\mathrm{Re}(h_{10}h_{11}^*) - 4\,\mathrm{Im}(h_{10}h_{11}^*)))\} \end{pmatrix} \quad (26f)$$

$$f_2 = \begin{pmatrix} \ln ch\{0.5(4\,\mathrm{Re}(y_1(t)h_{01}^*) + \Delta\ln P_0(I) + (4\,\mathrm{Im}(h_{10}h_{11}^*) + 4\,\mathrm{Re}(h_{10}h_{11}^*)))\} - \\ \ln ch\{0.5(4\,\mathrm{Re}(y_1(t)h_{01}^*) + \Delta\ln P_0(I) + (4\,\mathrm{Im}(h_{10}h_{11}^*) - 4\,\mathrm{Re}(h_{10}h_{11}^*)))\} \end{pmatrix} \quad (26g)$$

$$f_3 = \begin{pmatrix} \ln ch\{0.5(4\,\mathrm{Im}(y_1(t)h_{01}^*) + \Delta\ln P_0(Q) + (4\,\mathrm{Re}(h_{10}h_{11}^*) - 4\,\mathrm{Im}(h_{10}h_{11}^*)))\} - \\ \ln ch\{0.5(4\,\mathrm{Im}(y_1(t)h_{01}^*) + \Delta\ln P_0(Q) + (4\,\mathrm{Re}(h_{10}h_{11}^*) + 4\,\mathrm{Im}(h_{10}h_{11}^*)))\} \end{pmatrix} \quad (26h)$$

$$f_4 = \begin{pmatrix} \ln ch\{0.5(4\,\mathrm{Re}(y_1(t)h_{01}^*) + \Delta\ln P_0(I) + (4\,\mathrm{Re}(h_{10}h_{11}^*) - 4\,\mathrm{Im}(h_{10}h_{11}^*)))\} - \\ \ln ch\{0.5(4\,\mathrm{Re}(y_1(t)h_{01}^*) + \Delta\ln P_0(I) - (4\,\mathrm{Re}(h_{10}h_{11}^*) + 4\,\mathrm{Im}(h_{10}h_{11}^*)))\} \end{pmatrix} \quad (26i)$$

Here, the following new notation is introduced.

$$S_0 = \mathrm{Im}\{k \cdot y_1 \cdot h_{10}^*\},\quad S_1 = \mathrm{Im}\{k \cdot y_1 \cdot h_{11}^*\} S_2 = \mathrm{Re}\{k \cdot y_1 \cdot h_{11}^*\},\quad S_3 = \mathrm{Re}\{k \cdot y_1 \cdot h_{10}^*\}$$

$$\mathrm{Im}\,\Delta E = \mathrm{Im}(k \cdot h_{00} \cdot h_{01}^*),\quad \mathrm{Re}\,\Delta E = \mathrm{Re}(k \cdot h_{00} \cdot h_{01}^*)$$

$$\Delta E_0 = \mathrm{Re}\,\Delta E + \mathrm{Im}\,\Delta E,\quad \Delta E_1 = \mathrm{Re}\,\Delta E - \mathrm{Im}\,\Delta E \quad (27)$$

The signals S0, S3 can be calculated by the multiplier 31 which multiplies the received signal $y_1$ by $k \cdot h_{10}^*$, the imaginary part extraction portion 32 which extracts the imaginary part from the multiplication result, and the real part extraction portion 33 which extracts the real part, as shown in (A) of Fig. 13. The signals S1, S2 can be calculated by the multiplier 34 which multiplies the received signal $Y_1$ by $k \cdot h_{11}^*$, the imaginary part extraction portion 35 which extracts the imaginary part of the multiplication result, and the real part extraction portion 36 which extracts the real part, as shown in (B) of Fig. 13.

Fig. 14 shows a computation circuit which computes $\Delta\ln P_{REC1}(0,Q)$, computing the difference $\Delta\ln P_{REC1}(0, Q)$ in probabilities when the imaginary part of the symbol $D_0$ is +1 and is -1 from the signal $y_1(t)$ input to the second receiver REC1. However, the normalization factor k is taken to be $4/N_0$ (where No is the spectral intensity of Gaussian noise).

The computation circuit of Fig. 14 is fabricated in consideration of the notation above and the nonlinear function of equation (15); in blocks 37 and 38, 37a to 37d and 38a to 38e indicate limiters of Fig. 4 having prescribed energy differences.

Block 37 calculates the second term on the right side of equation (26a), $(L_1+L_2+L_3-L_4)$, block 38 calculates the first, third and fourth terms on the right side of equation (26a), and the adder 39 calculates and outputs $\Delta \ln P_{REC1}(0.Q) = \{\ln P(d_{Im}=+1/y(t)) - \ln P(d_{Im}=-1/y(t))\}$.

In Fig. 14, it should be noted that in the blocks 37 and 38, the adders 37e, 37f, 38f, 38g add $\Delta \ln P_0(I)$ and $\Delta \ln P_0(Q)$, and the adder 38p adds $\Delta \ln P_1(I)$. $\Delta \ln P_0(I)$ is the difference in probabilities that the real part of the second symbol Do is +1 and is -1; $\Delta \ln P_0(Q)$ is the difference in probabilities that the imaginary part of the symbol Do is +1 and is -1; and when deciding the imaginary part of the first symbol Do in the second receiver REC1, the posterior estimate of the first symbol Do is used to perform refinement. Further, $\Delta \ln P_1(I)$ is the difference in probabilities that the real part of the second symbol $D_1$ is +1 and is -1, and when deciding the imaginary part of the first symbol Do, the posterior estimate of the second symbol $D_1$ is used to perform refinement.

In block 37, 37g denotes a subtracter, 37h to 37i denote adders, and 37j denotes a multiplier; in block 38, 38h to 38i denote subtracters and 38j to 38p denote adders.

(h) Combination of $\Delta \ln P_{REC0}(O,Q)$ and $\Delta \ln P_{REC1}(O,Q)$

The sum of the estimate $\Delta \ln P_{REC0}(O,Q)$ and the estimate $\Delta \ln P_{REC1}(O,Q)$ obtained in the above (f) and (g) is the probability $\Delta \ln P_0(Q)$ that the imaginary part of the first symbol $D_0$ is +1 and is -1. Here, $\Delta \ln P_{REC0}(O.Q)$ is the difference in probabilities in the first receiver REC0 that the imaginary part of the first symbol Do is +1 and is -1, and $\Delta \ln P_{REC1}(0,Q)$ is the difference in probabilities in the second receiver REC1 that the imaginary part of the symbol Do is +1 and is -1.

Fig. 15 shows the decision circuit for the imaginary part of the first symbol $D_0$; the computation circuit 301, comprising the configuration of Fig. 12, outputs the estimate $\Delta \ln P_{REC0}(O, Q)$, the computation circuit 302, comprising the configuration of Fig. 14, outputs the estimate $\Delta \ln P_{REC1}(0, Q)$, the adder 303 adds the estimate $\Delta \ln P_{REC0}(0, Q)$ and the estimate $\Delta \ln P_{REC1}(0, Q)$ and outputs the synthesized estimate $\Delta \ln P_0(Q)$, and based on the synthesized estimate $\Delta \ln P_0(Q)$, the decision portion 304 judges whether the imaginary part of the first symbol Do is +1 or -1, and outputs the decision result $d_{Im}=Im(D_0)$.

When deciding the imaginary part of the first symbol Do, the decision circuit of Fig. 15 uses the posterior estimates $\Delta \ln P_1(I)$, $\Delta \ln P_1(Q)$ of the real and imaginary parts of the second symbol $D_1$ to perform refinement, and also uses the posterior estimates $\Delta \ln P_0(I)$, $\Delta \ln P_0(Q)$ of the real and imaginary parts of the symbol Do itself to perform refinement.

(i) Decision of the imaginary part $d_{Im}=Im(D_1)$ of the second symbol $D_1$

In the above (f) through (h), decision of the imaginary part $d_{Im}=Im(D_0)$ of the first symbol Do was explained; by a similar procedure, a decision can be made for the imaginary part $d_{Im}=Im(D_1)$ of the second symbol $D_1$.

(i-1) Estimation of the imaginary part $d_{Im}=Im(D_1)$ of the symbol $D_1$ received by the first receiver REC0

The first receiver REC0 outputs an estimate $\Delta \ln P_{REC0}(1,Q)$ of the imaginary part $d_{Im}=Im(D_1)$ of the second symbol $D_1$ according to an algorithm similar to the algorithm shown in Fig. 12. However,

$$S_0 = \mathrm{Im}\{k \cdot y_0 \cdot h_{01}^*\}, \quad S_1 = \mathrm{Im}\{k \cdot y_0 \cdot h_{00}^*\}$$

$$S_2 = \mathrm{Re}\{k \cdot y_0 \cdot h_{00}^*\}, \quad S_3 = \mathrm{Re}\{k \cdot y_0 \cdot h_{01}^*\}$$

$$\mathrm{Im}\,\Delta E = \mathrm{Im}(k \cdot h_{01} \cdot h_{00}^*), \quad \mathrm{Re}\,\Delta E = \mathrm{Re}(k \cdot h_{01} \cdot h_{00}^*),$$

$$\Delta E_0 = \mathrm{Re}\,\Delta E + \mathrm{Im}\,\Delta E, \quad \Delta E_1 = \mathrm{Re}\,\Delta E - \mathrm{Im}\,\Delta E \qquad (28)$$

(i-2) Estimation of the imaginary part $d_{Im}$=Im($D_1$) of the symbol $D_1$ received by the second receiver REC1

The second receiver REC1 outputs an estimate $\Delta lnP_{REC1}(1,Q)$ of the imaginary part $d_{Im}$=Im($D_1$) of the second symbol $D_1$ according to an algorithm similar to the algorithm shown in Fig. 14. However,

$$S_0 = \mathrm{Im}\{k \cdot y_1 \cdot h_{11}^*\},\quad S_1 = \mathrm{Im}\{k \cdot y_1 \cdot h_{10}^*\}$$

$$S_2 = \mathrm{Re}\{k \cdot y_1 \cdot h_{10}^*\},\quad S_3 = \mathrm{Re}\{k \cdot y_1 \cdot h_{11}^*\}$$

$$\mathrm{Im}\,\Delta E = \mathrm{Im}(k \cdot h_{11} \cdot h_{10}^*),\quad \mathrm{Re}\,\Delta E = \mathrm{Re}(k \cdot h_{11} \cdot h_{10}^*),$$

$$\Delta E_0 = \mathrm{Re}\,\Delta E + \mathrm{Im}\,\Delta E\,,\quad \Delta E_1 = \mathrm{Re}\,\Delta E - \mathrm{Im}\,\Delta E \qquad (29)$$

The sum of the estimate $\Delta lnP_{REC0}(1,Q)$ and the estimate $\Delta$ $lnP_{REC1}(1,Q)$ obtained in the above (i-1) and (i-2) is the estimate $\Delta lnP_1(Q)$ when the real part of the second symbol $D_1$ is +1 and when it is -1. Here, $\Delta lnP_{REC1}(1,Q)$ is the difference in probabilities when the imaginary part of the second symbol $D_1$ is +1 and when it is -1), and $\Delta lnP_{REC1}(1,Q)$ is the difference in probabilities when the imaginary part of the second symbol $D_1$ is +1 and when it is -1).

Fig. 16 shows the decision circuit for the imaginary part of the second symbol $D_1$; the computation circuit 401 outputs the estimate $\Delta lnP_{REC0}(1,Q)$, the computation circuit 402 outputs the estimate $\Delta lnP_{REC1}(1,Q)$, the adder 403 adds the estimate $\Delta lnP_{REC0}(1,Q)$ and the estimate $\Delta lnP_{REC1}(1,Q)$ and outputs the synthesized estimate $\Delta$ $lnP_1(Q)$, and based on the synthesized estimate $\Delta lnP_1(Q)$, the decision portion 404 judges whether the imaginary part of the second symbol $D_1$ is +1 or -1, and outputs the decision result $d_{Im}$=Im($D_1$).

When deciding the imaginary part of the second symbol $D_1$, this decision circuit uses the posterior estimates $\Delta lnP_0(I)$, $\Delta lnP_0(Q)$ of the real and imaginary parts of the first symbol Do to perform refinement, and also uses the posterior estimates $\Delta lnP_1(I)$, $\Delta$ $lnP_1(Q)$ of the real and imaginary parts of the symbol $D_1$ itself to perform refinement.

(j) BPSK Transmission

In the above, the case of QPSK transmission was explained; when using BPSK transmission, symbols comprise real parts only, and a circuit to decide imaginary parts becomes unnecessary. Further, the $\Delta lnP_0(Q)$, $\Delta lnP_1(Q)$ used in deciding real parts are set to 0.

(k) Simulations

Fig. 17 shows the BER characteristic when computations for a receiver of this invention are repeated twice. For comparison, simulation results for various reception methods of the prior art (the ZF-VBL method, MSSE-VBL method, MLD method), as well as the case of no interchannel interference (ICI-free) and REF simulation results, are also shown. From the simulation results, it is seen that a satisfactory characteristic close to the BER characteristic of the MLD method is obtained for a receiver of this invention, and the SNR loss is 0.5 dB or less than the BER characteristic of the MLD method.

(m) Circuit Complexity

The low degree of complexity of the reception algorithm of this invention is explained and contrast with the MLD method, with respect to cases in which:

(1) Both of two transmitters TRX0, TRX1 adopt BPSK modulation (BPSK case);

(2) One transmitter TRX0 adopts BPSK modulation, and the other transmitter TRX1 adopts QPSK modulation (B/QPSK case); and,

(3) Both of two transmitters TRX0, TRX1 adopt QPSK modulation (QPSK case).

Complexity is estimated in terms of the number of additions, subtractions, and multiplications performed for complex and for real numbers.

In the MLD method, $Q^m$ transmission vector candidates (replicas) are generated, the distance computation of equation (5) is performed, and the replica for which the distance is shortest is estimated to be the input data; the number of computations increases exponentially with the number of antennas M. However, Q [depends on] the modulation method; for BPSK, Q=2, and for QPSK, Q=4. Each Euclidean distance calculation requires four complex multiplications, two complex additions, and two complex subtractions. Moreover, according to the equation

$$(a + i \cdot b) \cdot (c + i \cdot d) = a \cdot c + i \cdot a \cdot d + i \cdot b \cdot c - b \cdot d \quad (30)$$

one complex multiplication is equivalent to four real multiplications, two real additions, and one real subtraction. A complex subtraction is equivalent to two real additions/subtractions.

(1) Case of BPSK

In the MLD method, distance calculations must be performed for $2^2$=4 candidates, so that the number of computations indicated in the first row of Table 4 are necessary. The numbers in the second row of the MLD method are for the case in which real computations are substituted for complex calculations. On the other hand, in the two-repetition turbo receiver of this invention, only the number of computations indicated in the third row of Table 4 are necessary, so that the number of computations is reduced. The numbers in the fourth row for the two-repetition turbo receiver are for the case in which real computations are substituted for complex computations; compared with the MLD method, about 1/3 the number of computations are necessary.

Table 4. BPSK

| | Complex Multiplication | Complex ADD | Complex SUB | Real Multiplication | Real ADD |
|---|---|---|---|---|---|
| MLD | 4×4=16 | 4×2=8 | 4×2=8 | 4×4=16 | 4×2=8 |
| MLD | | | | 80 | 88 |
| Turbo (2TI) | 6 | 0 | 0 | 8 | 10 |
| Turbo (2TI) | | | | 32 | 28 |

(2) Case of B/QPSK

In the MLD method, distance calculations must be performed for $2x2^2$=8 candidates, so that the number of computations indicated in the first row of Table 5 are necessary. The numbers in the second row of the MLD method are for the case in which real computations are substituted for complex calculations. On the other hand, in the two-repetition turbo receiver of this invention, only the number of computations indicated in the third row of Table 5 are necessary, so that the number of computations is reduced. The numbers in the fourth row for the two-repetition turbo receiver are for the case in which real computations are substituted for complex computations; compared with the MLD method, the number of computations necessary is reduced.

Table 5. BPSK-QPSK

| | Complex Multiplication | Complex ADD | Complex SUB | Real Multiplication | Real ADD |
|---|---|---|---|---|---|
| MLD | 32 | 16 | 16 | 32 | 16 |
| MLD | | | | 160 | 176 |
| Turbo (2TI) | 6 | 0 | 0 | 44 | 28 |
| Turbo (2TI) | | | | 68 | 46 |

(3) Case of QPSK

In the MLD method, distance calculations must be performed for $4^2$=16 candidates, so that the number of computations indicated in the first row of Table 6 are necessary. The numbers in the second row of the MLD method are for the case in which real computations are substituted for complex calculations. On the other hand, in the two-repetition turbo receiver of this invention, only the number of computations indicated in the third row of Table 6 are necessary, so that the number of computations is reduced. The numbers in the fourth row for the two-repetition turbo receiver are for the case in which real computations are substituted for complex computations; compared with the MLD method, the number of computations necessary is greatly reduced.

Table 6. QPSK- QPSK

| | Complex Multiplication | Complex ADD | Complex SUB | Real Multiplication | Real ADD |
|---|---|---|---|---|---|
| MLD | 64 | 32 | 32 | 64 | 32 |
| MLD | | | | 320 | 352 |
| Turbo (2TI) | 6 | 0 | 0 | 60 | 112 |
| Turbo (2TI) | | | | 84 | 130 |

Thus by means of this invention, the number of computations can be reduced compared with the MLD method, and moreover, a BER characteristic comparable to that ofMLD methods can be obtained.

In the above embodiment, in order to simplify the explanation, the transmission station and reception station used only two antennas each, and although the constellation type adopted by transmitters was assumed to be BPSK or QPSK, this invention can be applied to an arbitrary number of transmission antennas, reception antennas, and modulation types (multivalue modulation, M-QAM).

As many apparently widely different embodiments of the present invention can be made without departing from the scope thereof, it is to be understood that the invention is not limited to the specific embodiments thereof except as defined in the appended claims.

## Claims

**1.** A reception method for a multiple-input-multiple-output transmission system comprising a transmitting station which transmits two data streams using separate transmitting antennas and a receiving station which separates and outputs said data streams from signals received by two receiving antennas, the method comprising:

computing a bit estimate value of the first data stream based on the signals received by the first antenna, computing a bit estimate value of the first data stream based on the signals received by the second antenna, and synthesizing these bit estimate values to obtain a synthesized estimate value of the first data stream;
computing a bit estimate value of the second data stream based on the signals received by the first antenna, computing a bit estimate value of the second data stream based on the signals received by the second antenna, and synthesizing these bit estimate values to obtain a synthesized estimate value of the second data stream;
a first step for refining each of said bit estimate values of the first data stream by said synthesized estimate value of the second data stream and synthesizing the refined bit estimate values to refine the synthesized estimate value of the first data stream;
a second step for refining each of said bit estimate values of the second data stream by said synthesized estimate value of the first data stream and synthesizing the refined bit estimate values to refine the synthesized estimate value of the second data stream;
performing a bit decision for the first data stream based on the synthesized estimate value of the first data stream after the refining; and
performing a bit decision for the second data stream based on the synthesized estimate value of the second data stream after the refining.

**2.** The reception method according to Claim 1, further comprising:

repeating the first and second steps for refining, using the refined synthesized estimate values and refined bit estimate values; and

performing said bit decisions for the first data stream and for the second data stream after a prescribed number of such repetitions.

**3.** A reception method comprising:

when a transmitting station performs QPSK modulation on data to generate symbols each of which consists of a real part and an imaginary part and transmits the symbols, executing the method of claim 1 or 2 for each of the real part and the imaginary part.

**4.** The reception method according to Claim 3, further comprising the steps of:

refining said bit estimate values of the real part and the imaginary part of the first data stream using the synthesized estimate values of the real part and the imaginary part of the second data stream; and
refining said bit estimate values of the real part and the imaginary part of the second data stream using said synthesized estimate values of said real part and imaginary part of the first data stream.

**5.** A receiver device for a multiple-input-multiple-output transmission system comprising a transmitting station which transmits two data streams ($D_0$, $D_1$) using separate transmitting antennas and a receiving station which separates and outputs said data streams from signals ($y_0$, $y_1$) received by two receiving antennas, comprising:

a first computation circuit (101, 301), which computes a bit estimate value of a first data stream (Do) based on the signals ($y_0$) received by a first antenna;
a second computation circuit (102, 302), which computes a bit estimate value of the first data stream ($D_0$) based on the signals ($y_1$) received by a second antenna;
a third computation circuit (201, 401), which computes a bit estimate value of the second data stream ($D_1$) based on the signals ($y_0$) received by the first antenna;
a fourth computation circuit (202, 402), which computes a bit estimate value of the second data stream ($D_1$) based on the signals ($y_1$) received by the second antenna;
a first synthesis portion (103, 303), which synthesizes said bit estimate values of the first data stream ($D_0$) to obtain a synthesized estimate value of the first data stream;
a first decision circuit (104, 304), which performs a bit decision for the first data stream ($D_0$) based on the synthesized estimate value of the first data stream;
a second synthesis portion (203, 403), which synthesizes said bit estimate values of the second data stream ($D_1$) to obtain a synthesized estimate value of the second data stream; and
a second decision circuit (204, 404) which performs a bit decision for the second data stream ($D_1$) based on said synthesized estimate value of the second data stream,
wherein:

the first and second computation circuits (101, 102, 301, 302) use said synthesized estimate value of the second data stream ($D_1$) to refine each of said bit estimate values of the first data stream ($D_0$), the first synthesis portion (103, 303) synthesizes the refined bit estimate values of the first data stream ($D_0$) to refine the synthesized estimate value of the first data stream, and said first decision circuit (104, 304) performs the bit decision for the first data stream ($D_0$) based on the synthesized estimate value of the first data stream ($D_0$) after the refining; and
the third and fourth computation circuits (201, 202, 401, 402) use said synthesized estimate value of the first data stream ($D_0$) to refine each of said bit estimate values of the second data stream ($D_1$), the second synthesis portion (203, 403) synthesizes said refined bit estimate values of the second data stream ($D_1$) to refine the synthesized estimate value of the second data stream ($D_1$), and said second decision circuit (204, 404) performs the bit decision for the second data stream ($D_1$) based on the synthesized estimate value of the second data stream ($D_1$) after the refining.

**6.** The receiver device according to Claim 5, wherein
said computation circuits (101, 102, 201, 202, 301, 302, 401, 402) are configured to repeatedly refine the corresponding bit estimate values using the synthesized estimate values after each repetition;
said corresponding synthesis portions (103, 203, 303, 403) are configured to synthesize the corresponding refined bit estimate values to refine the corresponding synthesized estimate values, every time the bit estimate values are refined;
after a prescribed number of repetitions, said first decision circuit (104, 304) performs the bit decision for the first data stream based on said refined synthesized estimate value of the first data stream; and
after a prescribed number of repetitions, said second decision circuit (204, 404) performs the bit decision for the second data stream based on said refined synthesized estimate value of the second data stream.

7. The receiver device according to Claim 5 or 6, wherein, when a transmitting station performs QPSK modulation on data to generate symbols each of which consists of a real part and an imaginary part and transmits the symbols, said first to fourth computation circuits (101, 102, 201, 202, 301, 302, 401, 402), said first and second synthesis circuits (103, 203, 303, 403) and said first and second decision circuits (104, 204, 304, 404) are provided for each of the real part and the imaginary part.

## Patentansprüche

1. Empfangsverfahren für ein Mehrfacheingang-Mehrfachausgang-Übertragungssystem, das eine Übertragungsstation, die zwei Datenströme unter Verwendung getrennter Sendeantennen überträgt, und eine Empfangsstation aufweist, welche die Datenströme aus Signalen, die von den zwei Empfangsantennen empfangen wurden, abtrennt und ausgibt, wobei das Verfahren umfasst:

   Berechnen eines Bitschätzwertes des ersten Datenstroms auf Basis der Signale, die von der ersten Antenne empfangen wurden, Berechnen eines Bitschätzwertes des ersten Datenstroms auf Basis der Signale, die von der zweiten Antenne empfangen wurden, und Synthetisieren dieser Bitschätzwerte, um einen synthetisierten Schätzwert des ersten Datenstroms zu erhalten;
   Berechnen eines Bitschätzwertes des zweiten Datenstroms auf Basis der Signale, die von der ersten Antenne empfangen wurden, Berechnen eines Bitschätzwertes des zweiten Datenstroms auf Basis der Signale, die von der zweiten Antenne empfangen wurden, und Synthetisieren dieser Bitschätzwerte, um einen synthetisierten Schätzwert des zweiten Datenstroms zu erhalten;
   einen ersten Schritt zum Verfeinern eines jeden der Bitschätzwerte des ersten Datenstroms durch den synthetisierten Schätzwert des zweiten Datenstroms und Synthetisieren der verfeinerten Bitschätzwerte, um den synthetisierten Schätzwert des ersten Datenstroms zu verfeinern;
   einen zweiten Schritt zum Verfeinern eines jeden der Bitschätzwerte des zweiten Datenstroms durch den synthetisierten Schätzwert des ersten Datenstroms und Synthetisieren der verfeinerten Bitschätzwerte, um den synthetisierten Schätzwert des zweiten Datenstroms zu verfeinern;
   Ausführen einer Bitentscheidung für den ersten Datenstrom auf Basis des synthetisierten Schätzwertes des ersten Datenstroms nach der Verfeinerung; und
   Ausführen einer Bitentscheidung für den zweiten Datenstrom auf Basis des synthetisierten Schätzwertes des zweiten Datenstroms nach der Verfeinerung.

2. Empfangsverfahren nach Anspruch 1, ferner umfassend:

   Wiederholen des ersten und zweiten Schritts zur Verfeinerung, Verwenden der verfeinerten synthetisierten Schätzwerte und der verfeinerten Bitschätzwerte; und
   Ausführen der Bitentscheidungen für den ersten Datenstrom und für den zweiten Datenstrom nach einer vorgeschriebenen Zahl derartiger Wiederholungen.

3. Empfangsverfahren, umfassend:

   wenn eine Übertragungsstation eine QPSK-Modulation an den Daten ausführt, um Symbole zu erzeugen, von denen jedes aus einem Realteil und einem Imaginärteil besteht, und die Symbole überträgt, dann Ausführen des Verfahrens nach Anspruch 1 oder 2 für jeden der Realteile und Imaginärteile.

4. Empfangsverfahren nach Anspruch 3, ferner mit den Schritten zum:

   Verfeinern der Bitschätzwerte des Realteils und des Imaginärteils des ersten Datenstroms unter Verwendung der synthetisierten Schätzwerte des Realteils und des Imaginärteils des zweiten Datenstroms; und
   Verfeinern der Bitschätzwerte des Realteils und des Imaginärteils des zweiten Datenstroms unter Verwendung der synthetisierten Schätzwerte des Realteils und des Imaginärteils des ersten Datenstroms.

5. Empfängereinrichtung für ein Mehrfacheingang-Mehrfachausgang-Übertragungssystem, das eine Übertragungs-

station, die zwei Datenströme ($D_0$, $D_1$) unter Verwendung getrennter Sendeantennen überträgt, und eine Empfangsstation aufweist, welche die Datenströme aus Signalen ($y_0$, $y_1$), die von den zwei Empfangsantennen empfangen wurden, abtrennt und ausgibt, mit:

einer ersten Berechnungsschaltung (101, 301), die einen Bitschätzwert eines ersten Datenstroms ($D_0$) auf Basis der durch eine erste Antenne empfangenen Signale ($y_0$) berechnet;
einer zweiten Berechnungsschaltung (102, 302), die einen Bitschätzwert des ersten Datenstroms ($D_0$) auf Basis der durch eine zweite Antenne empfangenen Signale ($y_1$) berechnet;
einer dritten Berechnungsschaltung (201, 401), die einen Bitschätzwert des zweiten Datenstroms ($D_1$) auf Basis der durch die erste Antenne empfangenen Signale ($y_0$) berechnet;
einer vierten Berechnungsschaltung (202, 402), die einen Bitschätzwert des zweiten Datenstroms ($D_1$) auf Basis der durch die zweite Antenne empfangenen Signale ($y_1$) berechnet;
einem ersten Syntheseteil (103, 303), der die Bitschätzwerte des ersten Datenstroms ($D_0$) synthetisiert, um einen synthetisierten Schätzwert des ersten Datenstroms zu erhalten;
einer ersten Entscheidungsschaltung (104, 304), die eine Bitentscheidung für den ersten Datenstrom ($D_0$) auf Basis des synthetisierten Schätzwertes des ersten Datenstroms ausführt;
einem zweiten Syntheseteil (203, 403), der die Bitschätzwerte des zweiten Datenstroms ($D_1$) synthetisiert, um einen synthetisierten Schätzwert des zweiten Datenstroms zu erhalten; und
einer zweiten Entscheidungsschaltung (204, 404), die eine Bitentscheidung für den zweiten Datenstrom ($D_1$) auf Basis des synthetisierten Schätzwertes des zweiten Datenstroms ausführt, wobei:

die erste und zweite Berechnungsschaltung (101, 102, 301, 302) den synthetisierten Schätzwert des zweiten Datenstroms ($D_1$) verwenden, um jeden der Bitschätzwerte des ersten Datenstroms ($D_0$) zu verfeinern, der erste Syntheseteil (103, 303) die verfeinerten Bitschätzwerte des ersten Datenstroms ($D_0$) synthetisiert, um den synthetisierten Schätzwert des ersten Datenstroms zu verfeinern, und die erste Entscheidungsschaltung (104, 304) die Bitentscheidung für den ersten Datenstrom ($D_0$) auf Basis des synthetisierten Schätzwertes des ersten Datenstroms ($D_0$) nach dem Verfeinern ausführt; und
die dritte und vierte Berechnungsschaltung (201, 202, 401, 402) den synthetisierten Schätzwert des ersten Datenstroms ($D_0$) verwenden, um jeden der Bitschätzwerte des zweiten Datenstroms ($D_1$) zu verfeinern, der zweite Syntheseteil (203, 403) die verfeinerten Bitschätzwerte des zweiten Datenstroms ($D_1$) synthetisiert, um den synthetisierten Schätzwert des zweiten Datenstroms ($D_1$) zu verfeinern, und die zweite Entscheidungsschaltung (204, 404) die Bitentscheidung für den zweiten Datenstrom ($D_1$) auf Basis des synthetisierten Schätzwertes des zweiten Datenstroms ($D_1$) nach dem Verfeinern ausführt.

**6.** Empfängereinrichtung nach Anspruch 5, wobei
die Berechnungsschaltungen (101, 102, 201, 202, 301, 302, 401, 402) eingerichtet sind, die entsprechenden Bitschätzwerte wiederholt unter Verwendung der synthetisierten Schätzwerte nach jeder Wiederholung zu verfeinern;
die entsprechenden Syntheseteile (103, 203, 303, 403) eingerichtet sind, die entsprechenden verfeinerten Bitschätzwerte zu synthetisieren, um die entsprechenden synthetisierten Schätzwerte immer dann zu verfeinern, wenn die Bitschätzwerte verfeinert sind;
die erste Entscheidungsschaltung (104, 304) nach einer vorgeschriebenen Anzahl von Wiederholungen die Bitentscheidung für den ersten Datenstrom auf Basis des verfeinerten synthetisierten Schätzwertes des ersten Datenstroms ausführt; und
die zweite Entscheidungsschaltung (204, 404) nach einer vorgeschriebenen Anzahl von Wiederholungen die Bitentscheidung für den zweiten Datenstrom auf Basis des verfeinerten synthetisierten Schätzwertes des zweiten Datenstroms ausführt.

**7.** Empfängereinrichtung nach Anspruch 5 oder 6, wobei dann, wenn die Übertragungsstation eine QPSK-Modulation an den Daten ausführt, um Symbole zu erzeugen, von denen jedes aus einem Realteil und einem Imaginärteil besteht, und die Symbole überträgt, die erste bis vierte Berechnungsschaltung (101, 102, 201, 202, 301, 302, 401, 402), die erste und zweite Syntheseschaltung (103, 203, 303, 403) und die erste und zweite Entscheidungsschaltung (104, 204, 304, 404) für jeden der Realteile und Imaginärteile vorgesehen sind.

## Revendications

**1.** Procédé de réception pour un système de transmission de type « entrée multiple, sortie multiple » comprenant une station émettrice qui émet deux flux de données en utilisant des antennes émettrices distinctes, et une station réceptrice qui sépare et génère en sortie lesdits flux de données à partir de signaux reçus par deux antennes émettrices, le procédé consistant à :

calculer une valeur d'estimation binaire du premier flux de données sur la base des signaux reçus par la première antenne, calculer une valeur d'estimation binaire du premier flux de données sur la base des signaux reçus par la seconde antenne, et synthétiser ces valeurs d'estimation binaire en vue d'obtenir une valeur d'estimation synthétisée du premier flux de données ;
calculer une valeur d'estimation binaire du second flux de données sur la base des signaux reçus par la première antenne, calculer une valeur d'estimation binaire du second flux de données sur la base des signaux reçus par la seconde antenne, et synthétiser ces valeurs d'estimation binaire en vue d'obtenir une valeur d'estimation synthétisée du second flux de données ; et comportant
une première étape destinée à affiner chacune desdites valeurs d'estimation binaire du premier flux de données par ladite valeur d'estimation synthétisée du second flux de données, et à synthétiser les valeurs d'estimation binaire affinées en vue d'affiner la valeur d'estimation synthétisée du premier flux de données ;
une seconde étape destinée à affiner chacune desdites valeurs d'estimation binaire du second flux de données par ladite valeur d'estimation synthétisée du premier flux de données, et à synthétiser les valeurs d'estimation binaire affinées en vue d'affiner la valeur d'estimation synthétisée du second flux de données ;
mettre en oeuvre une décision binaire pour le premier flux de données sur la base de la valeur d'estimation synthétisée du premier flux de données postérieurement à l'affinage ; et
mettre en oeuvre une décision binaire pour le second flux de données sur la base de la valeur d'estimation synthétisée du second flux de données postérieurement à l'affinage.

**2.** Procédé de réception selon la revendication 1, consistant en outre à :

répéter les première et seconde étapes d'affinage, en utilisant les valeurs d'estimation synthétisées affinées et les valeurs d'estimation binaire affinées ; et
mettre en oeuvre lesdites décisions binaires pour le premier flux de données et pour le second flux de données après un nombre prescrit de ces répétitions.

**3.** Procédé de réception consistant à :

lorsqu'une station émettrice met en oeuvre une modulation QPSK sur des données en vue de générer des symboles dont chacun est constitué d'une partie réelle et d'une partie imaginaire, et transmet les symboles, mettre en oeuvre le procédé selon la revendication 1 ou 2, pour chacune de la partie réelle et de la partie imaginaire.

**4.** Procédé de réception selon la revendication 3, comprenant en outre les étapes ci-dessous consistant à :

affiner lesdites valeurs d'estimation binaire de la partie réelle et de la partie imaginaire du premier flux de données en utilisant les valeurs d'estimation synthétisées de la partie réelle et de la partie imaginaire du second flux de données ; et
affiner lesdites valeurs d'estimation binaire de la partie réelle et de la partie imaginaire du second flux de données en utilisant lesdites valeurs d'estimation synthétisées de ladite partie réelle et de ladite partie imaginaire du premier flux de données.

**5.** Dispositif récepteur pour un système de transmission de type « entrée multiple, sortie multiple » comprenant une station émettrice qui émet deux flux de données ($D_0$, $D_1$) en utilisant des antennes émettrices distinctes, et une station réceptrice qui sépare et génère en sortie lesdits flux de données à partir de signaux ($y_0$, $y_1$) reçus par deux antennes émettrices, comprenant :

un premier circuit de calcul (101, 301), qui calcule une valeur d'estimation binaire d'un premier flux de données ($D_0$) sur la base des signaux ($y_0$) reçus par une première antenne ;
un deuxième circuit de calcul (102, 302), qui calcule une valeur d'estimation binaire du premier flux de données ($D_0$) sur la base des signaux ($y_1$) reçus par une seconde antenne ;
un troisième circuit de calcul (201, 401), qui calcule une valeur d'estimation binaire du second flux de données ($D_1$) sur la base des signaux ($y_0$) reçus par la première antenne ;
un quatrième circuit de calcul (202, 402), qui calcule une valeur d'estimation binaire du second flux de données ($D_1$) sur la base des signaux ($y_1$) reçus par la seconde antenne ;

une première partie de synthèse (103, 303), qui synthétise lesdites valeurs d'estimation binaire du premier flux de données ($D_0$) en vue d'obtenir une valeur d'estimation synthétisée du premier flux de données ;
un premier circuit de décision (104, 304), qui met en oeuvre une décision binaire pour le premier flux de données ($D_0$) sur la base de la valeur d'estimation synthétisée du premier flux de données ;
une seconde partie de synthèse (203, 403), qui synthétise lesdites valeurs d'estimation binaire du second flux de données ($D_1$) en vue d'obtenir une valeur d'estimation synthétisée du second flux de données ; et
un second circuit de décision (204, 404) qui met en oeuvre une décision binaire pour le second flux de données ($D_1$) sur la base de ladite valeur d'estimation synthétisée du second flux de données,
dans lequel :

les premier et deuxième circuits de calcul (101, 102, 301, 302) utilisent ladite valeur d'estimation synthétisée du second flux de données ($D_1$) en vue d'affiner chacune desdites valeurs d'estimation binaire du premier flux de données ($D_0$), la première partie de synthèse (103, 303) synthétise les valeurs d'estimation binaire affinées du premier flux de données ($D_0$) en vue d'affiner la valeur d'estimation synthétisée du premier flux de données, et ledit premier circuit de décision (104, 304) met en oeuvre la décision binaire pour le premier flux de données ($D_0$) sur la base de la valeur d'estimation synthétisée du premier flux de données ($D_0$) postérieurement à l'affinage ; et
les troisième et quatrième circuits de calcul (201, 202, 401, 402) utilisent ladite valeur d'estimation synthétisée du premier flux de données ($D_0$) en vue d'affiner chacune desdites valeurs d'estimation binaire du second flux de données ($D_1$), la seconde partie de synthèse (203, 403) synthétise lesdites valeurs d'estimation binaire affinées du second flux de données ($D_1$) en vue d'affiner la valeur d'estimation synthétisée du second flux de données ($D_1$), et ledit second circuit de décision (204, 404) met en oeuvre la décision binaire pour le second flux de données ($D_1$) sur la base de la valeur d'estimation synthétisée du second flux de données ($D_1$) postérieurement à l'affinage.

**6.** Dispositif récepteur selon la revendication 5, dans lequel
lesdits circuits de calcul (101, 102, 201, 202, 301, 302, 401, 402) sont configurés de manière à affiner de façon répétée les valeurs d'estimation binaire correspondantes en utilisant les valeurs d'estimation synthétisées postérieurement à chaque répétition ;
lesdites parties de synthèse correspondantes (103, 203, 303, 403) sont configurées de manière à synthétiser les valeurs d'estimation binaire affinées correspondantes, en vue d'affiner les valeurs d'estimation synthétisées correspondantes, à chaque fois que les valeurs d'estimation binaire sont affinées ;
postérieurement à un nombre prescrit de répétitions, ledit premier circuit de décision (104, 304) met en oeuvre la décision binaire pour le premier flux de données sur la base de ladite valeur d'estimation synthétisée affinée du premier flux de données ; et
postérieurement à un nombre prescrit de répétitions, ledit second circuit de décision (204, 404) met en oeuvre la décision binaire pour le second flux de données sur la base de ladite valeur d'estimation synthétisée affinée du second flux de données.

**7.** Dispositif récepteur selon la revendication 5 ou 6, dans lequel, lorsqu'une station émettrice met en oeuvre une modulation QPSK sur des données en vue de générer des symboles dont chacun est constitué d'une partie réelle et d'une partie imaginaire, et transmet les symboles, lesdits premier à quatrième circuits de calcul (101, 102, 201, 202, 301, 302, 401, 402), lesdits premier et second circuits de synthèse (103, 203, 303, 403) et lesdits premier et second circuits de décision (104, 204, 304, 404) sont fournis pour chacune de la partie réelle et de la partie imaginaire.

FIG. 1

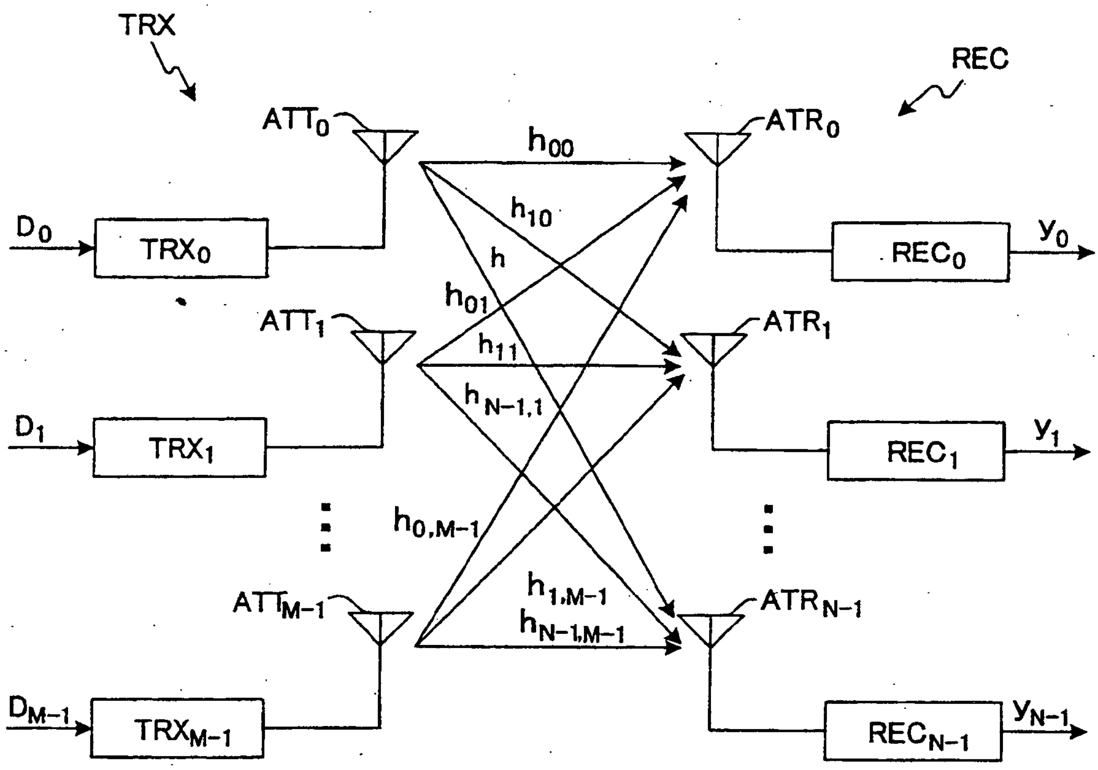
TRX
REC
ATT0
ATT1
ATTM-1
ATR0
ATR1
ATRN-1
D0
D1
DM-1
TRX0
TRX1
TRXM-1
REC0
REC1
RECN-1
y0
y1
yN-1
h00
h10
h
h01
h11
hN-1,1
h0,M-1
h1,M-1
hN-1,M-1

FIG. 2

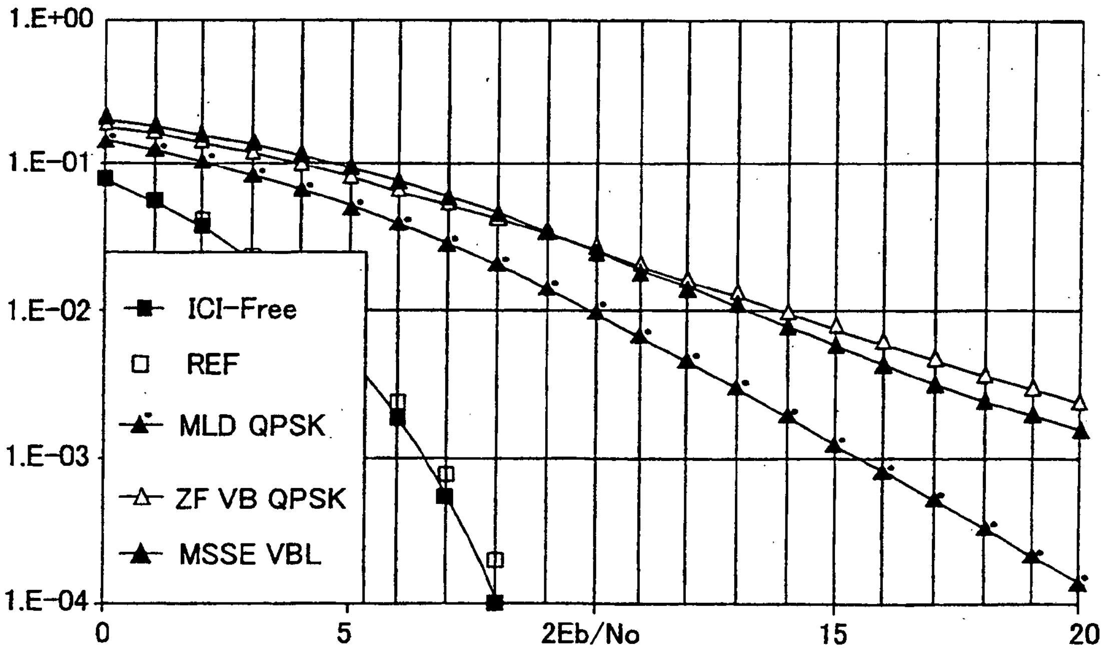
1.E+00
1.E-01
1.E-02
1.E-03
1.E-04
0
5
2Eb/No
15
20
ICI-Free
REF
MLD QPSK
ZF VB QPSK
MSSE VBL

FIG. 3

(A)

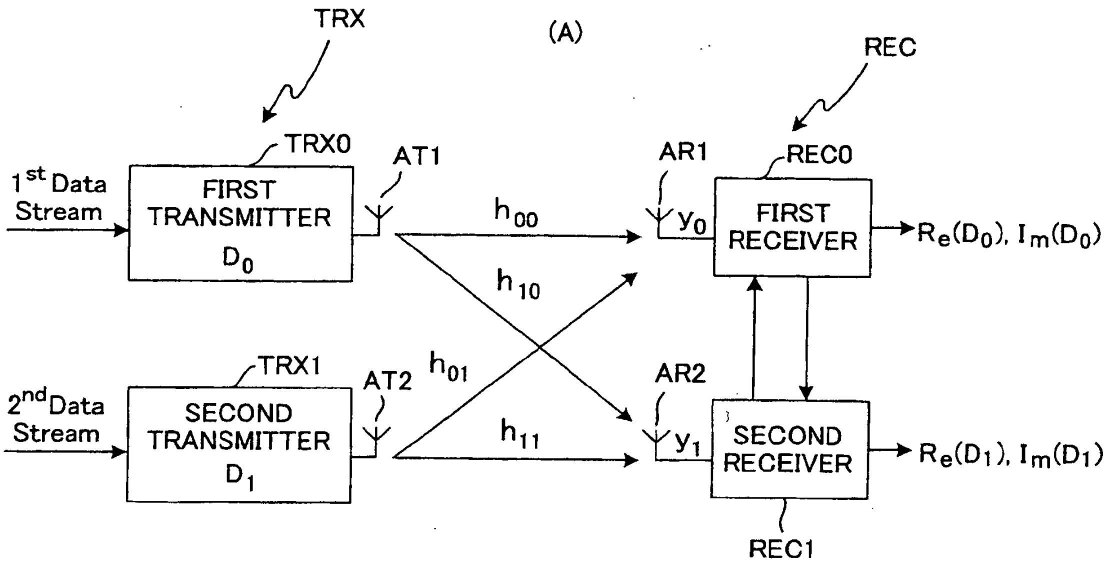
TRX
REC
TRX0
AT1
AR1
REC0
1st Data Stream
FIRST TRANSMITTER
D0
h00
y0
FIRST RECEIVER
Re(D0), Im(D0)
h10
TRX1
AT2
h01
AR2
2nd Data Stream
SECOND TRANSMITTER
D1
h11
y1
SECOND RECEIVER
Re(D1), Im(D1)
REC1

(B)

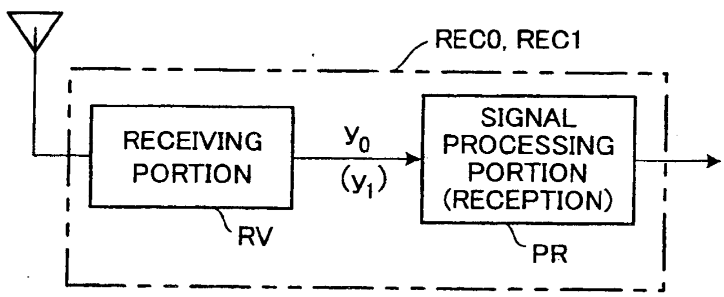
REC0, REC1
RECEIVING PORTION
y0
(y1)
SIGNAL PROCESSING PORTION (RECEPTION)
RV
PR

FIG. 4

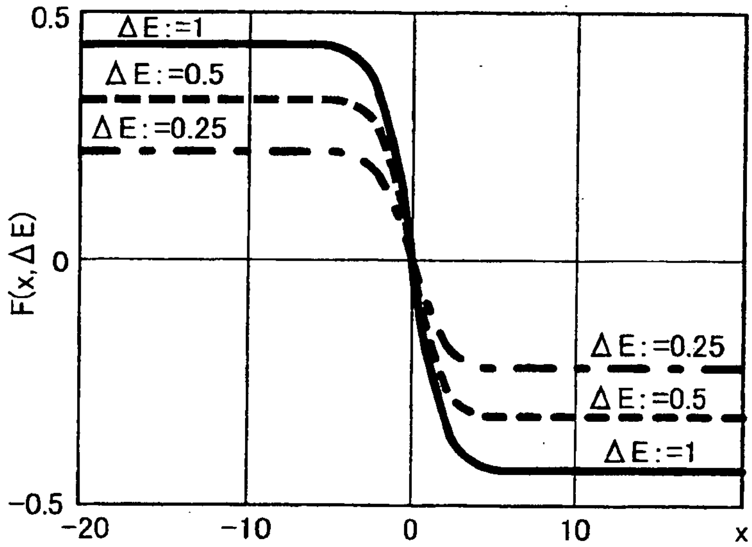
0.5
0
−0.5
−20
−10
0
10
x
F(x, ΔE)
ΔE:=1
ΔE:=0.5
ΔE:=0.25
ΔE:=0.25
ΔE:=0.5
ΔE:=1

FIG. 5

(A)

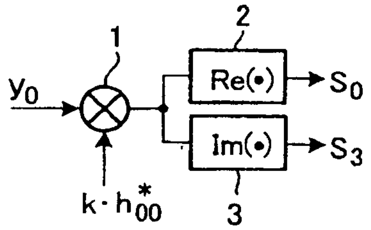
1
2
3
y0
k·h*00
Re(•)
Im(•)
S0
S3

(B)

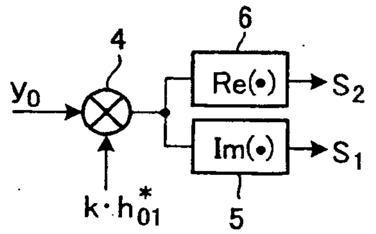
4
6
5
y0
k·h*01
Re(•)
Im(•)
S2
S1

FIG. 6

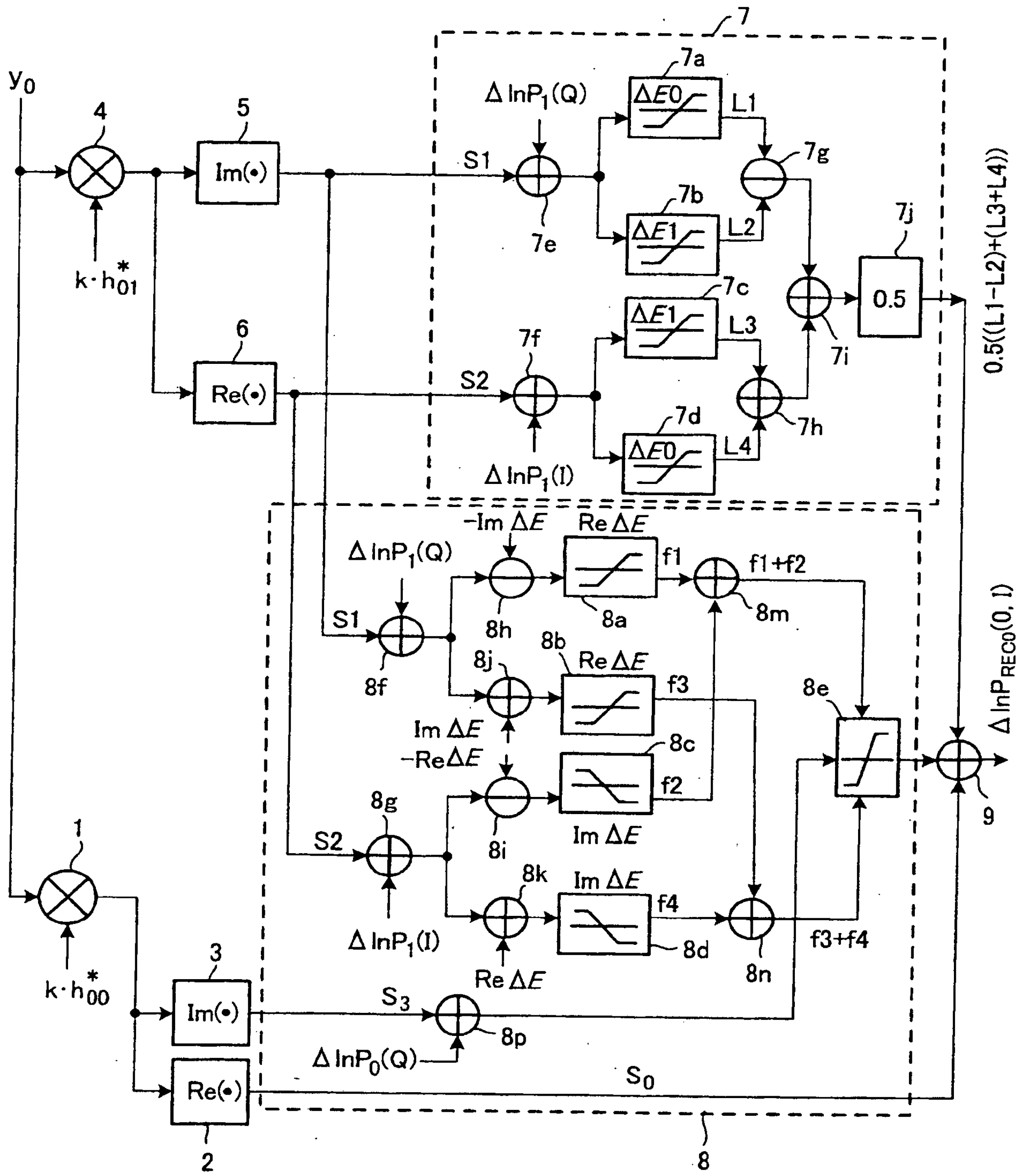

y0
4
5
Im(•)
6
Re(•)
k·h*01
7
7a
ΔE0
L1
7g
ΔlnP1(Q)
S1
7e
7b
ΔE1
L2
7j
0.5
7c
ΔE1
L3
7i
7f
S2
7h
7d
ΔE0
L4
ΔlnP1(I)
0.5((L1−L2)+(L3+L4))
−Im ΔE
Re ΔE
ΔlnP1(Q)
f1
f1+f2
8h
8a
8m
S1
8f
8j
8b
Re ΔE
f3
8e
Im ΔE
−Re ΔE
8c
f2
Δ lnPREC0(0, I)
8g
S2
8i
Im ΔE
9
1
8k
Im ΔE
f4
ΔlnP1(I)
8d
8n
f3+f4
3
Im(•)
k·h*00
Re ΔE
S3
8p
ΔlnP0(Q)
S0
Re(•)
2
8

FIG. 7

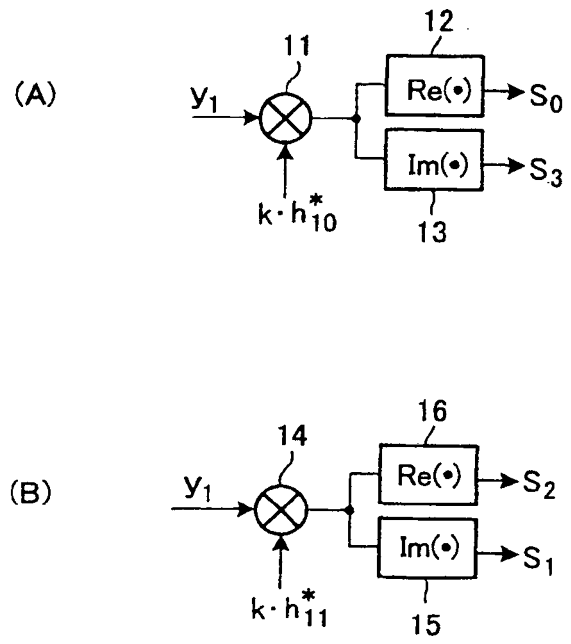

FIG. 8

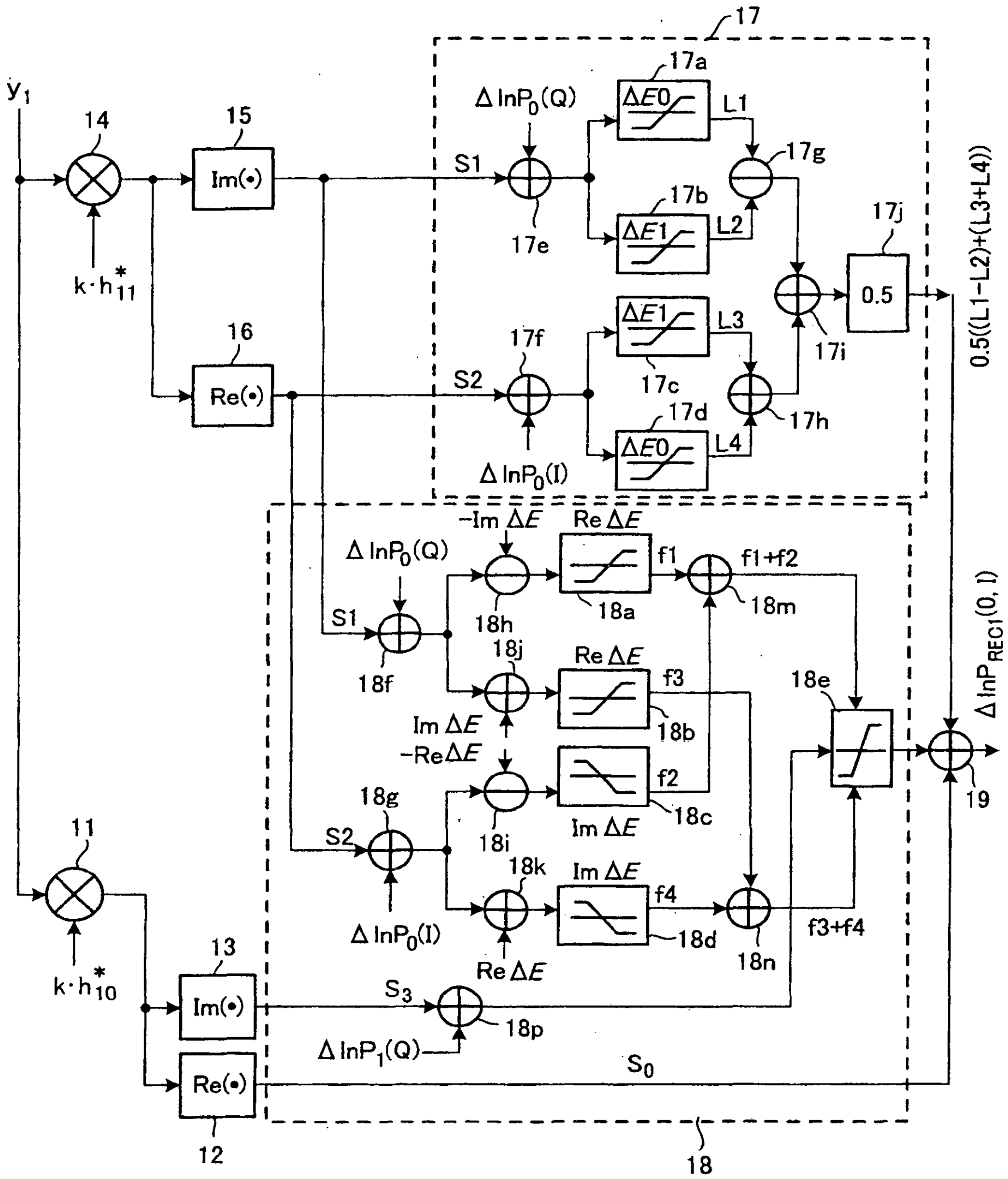

y1
14
15
Im(•)
16
Re(•)
k·h*11
17
17a
17b
17c
17d
17e
17f
17g
17h
17i
17j
ΔEO
ΔE1
L1
L2
L3
L4
S1
S2
Δ lnP0(Q)
Δ lnP0(I)
0.5
0.5((L1−L2)+(L3+L4))
18
18a
18b
18c
18d
18e
18f
18g
18h
18i
18j
18k
18m
18n
18p
−Im ΔE
Re ΔE
Im ΔE
−Re ΔE
f1
f2
f3
f4
f1+f2
f3+f4
S3
S0
Δ lnP1(Q)
Δ lnPREC1(0, I)
19
11
k·h*10
13
12

FIG. 9

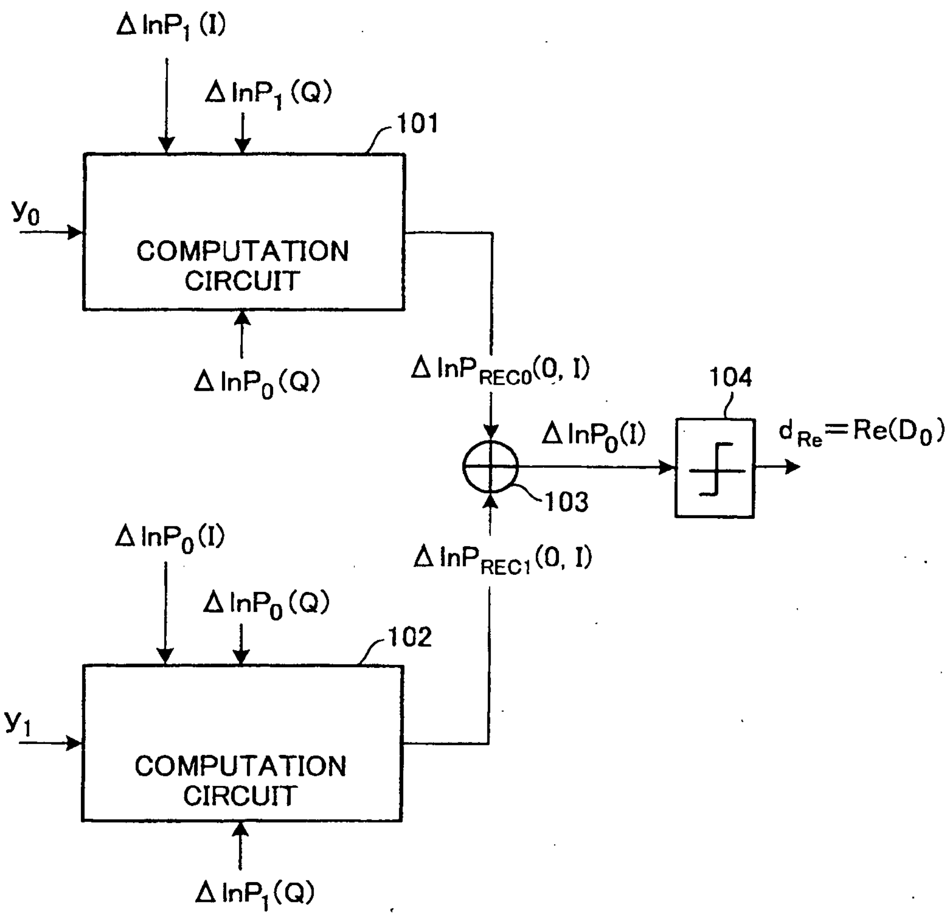

Δ lnP1 (I)
Δ lnP1 (Q)
101
y0
COMPUTATION CIRCUIT
Δ lnP0 (Q)
Δ lnPREC0(0, I)
104
Δ lnP0(I)
dRe=Re(D0)
103
Δ lnP0 (I)
Δ lnPREC1(0, I)
Δ lnP0 (Q)
102
y1
COMPUTATION CIRCUIT
Δ lnP1 (Q)

FIG. 10

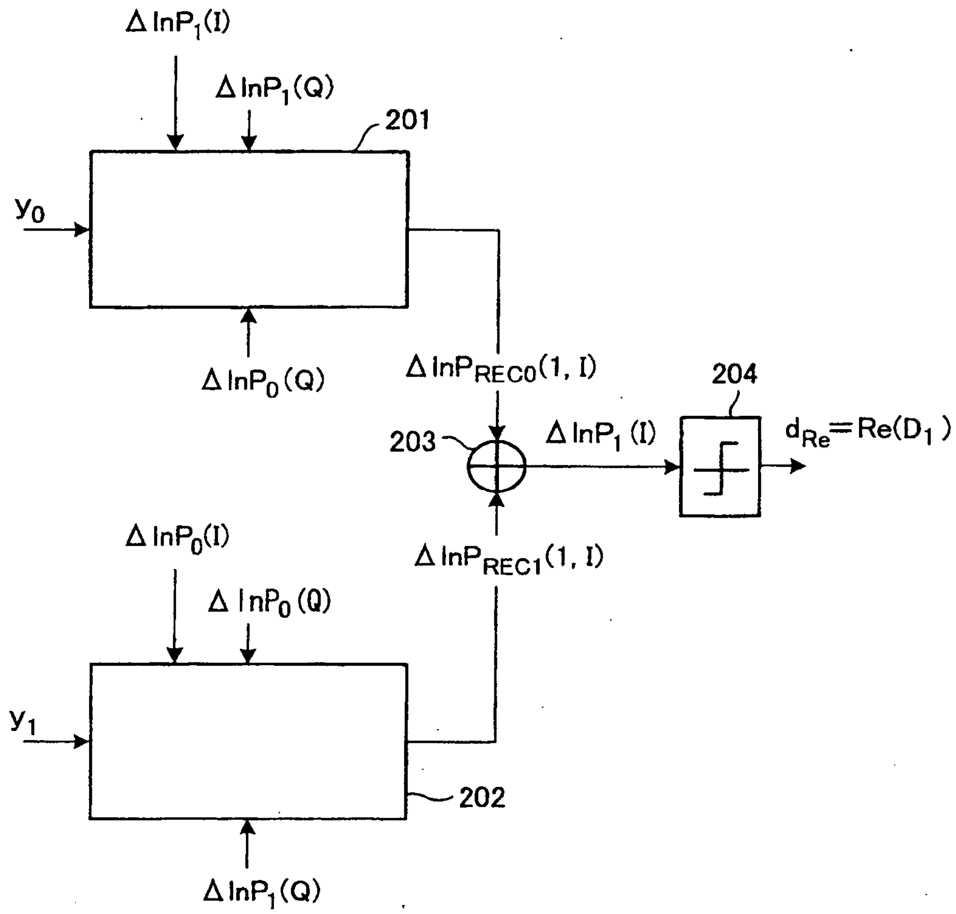
Δ lnP1(I)
Δ lnP1(Q)
201
y0
Δ lnP0(Q)
Δ lnPREC0(1, I)
204
203
Δ lnP1 (I)
dRe=Re(D1)
Δ lnP0(I)
Δ lnPREC1(1, I)
Δ lnP0(Q)
y1
202
Δ lnP1(Q)

FIG. 11

(A)

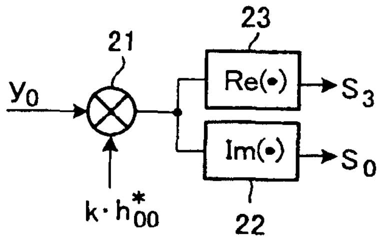


(B)

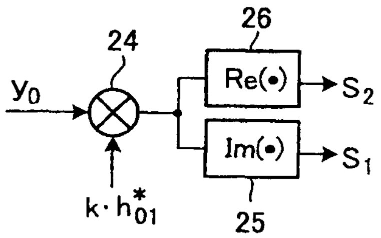

FIG. 12

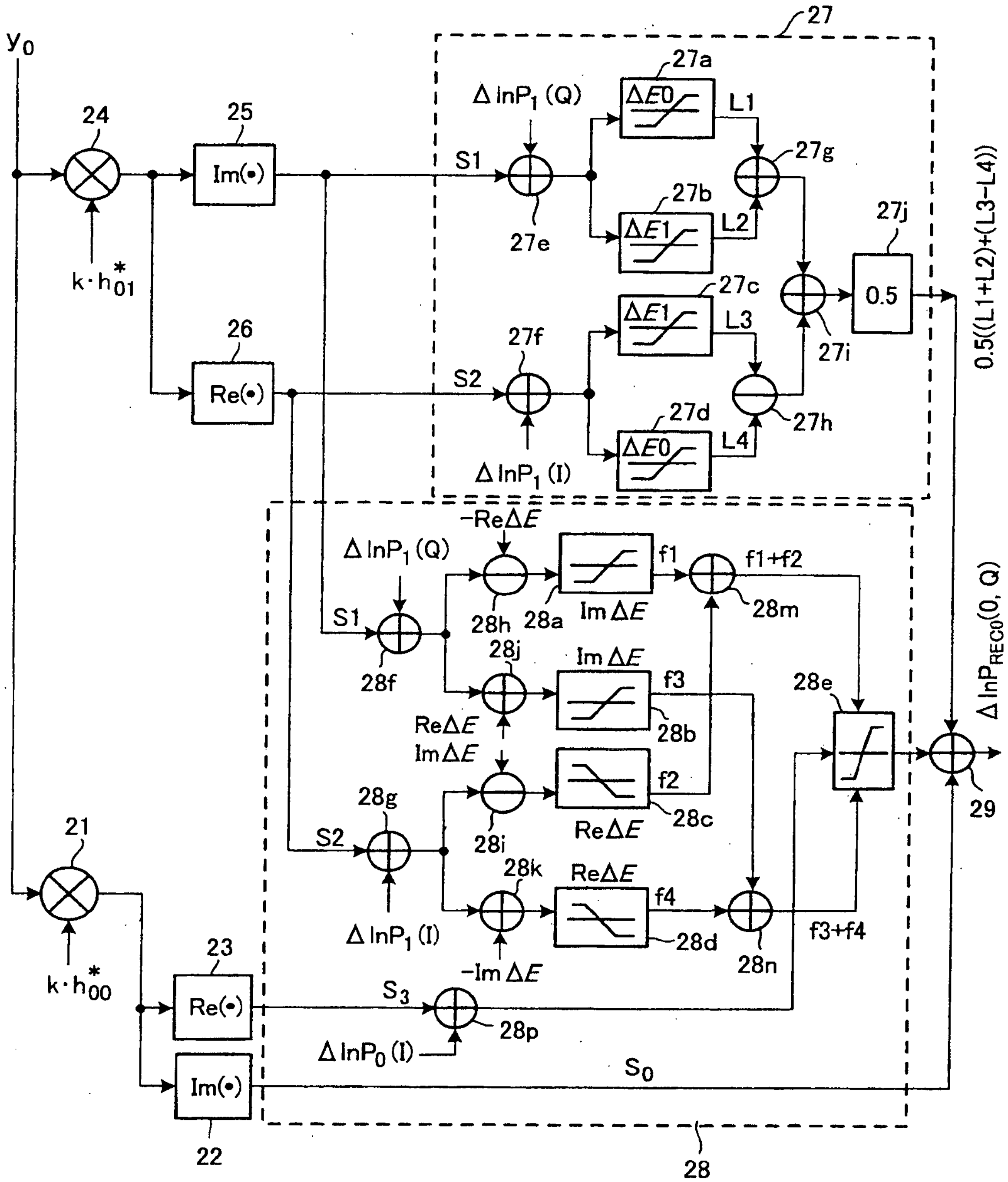

y0
24
25
Im(•)
k·h*01
26
Re(•)
27
27a
ΔlnP1 (Q)
ΔE0
L1
S1
27g
27b
27e
ΔE1
L2
27j
27c
0.5
ΔE1
L3
27i
27f
S2
27h
27d
ΔE0
L4
ΔlnP1 (I)
0.5((L1+L2)+(L3-L4))
-ReΔE
ΔlnP1 (Q)
f1
f1+f2
28h
28a
ImΔE
28m
S1
28j
28f
ImΔE
f3
28e
ReΔE
28b
ImΔE
f2
28g
28c
ReΔE
28i
S2
28k
ReΔE
f4
ΔlnP1 (I)
28d
28n
f3+f4
-ImΔE
ΔlnPREC0(0, Q)
29
21
k·h*00
23
Re(•)
S3
28p
ΔlnP0 (I)
S0
Im(•)
22
28

FIG. 13

(A)

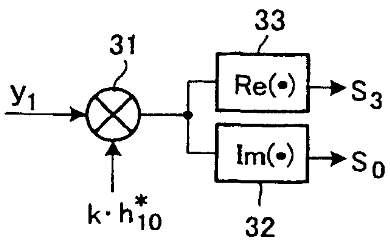


(B)

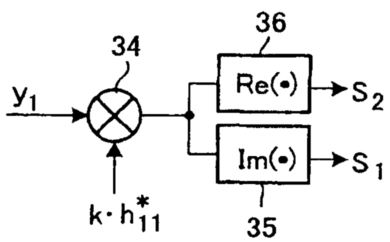

FIG. 14

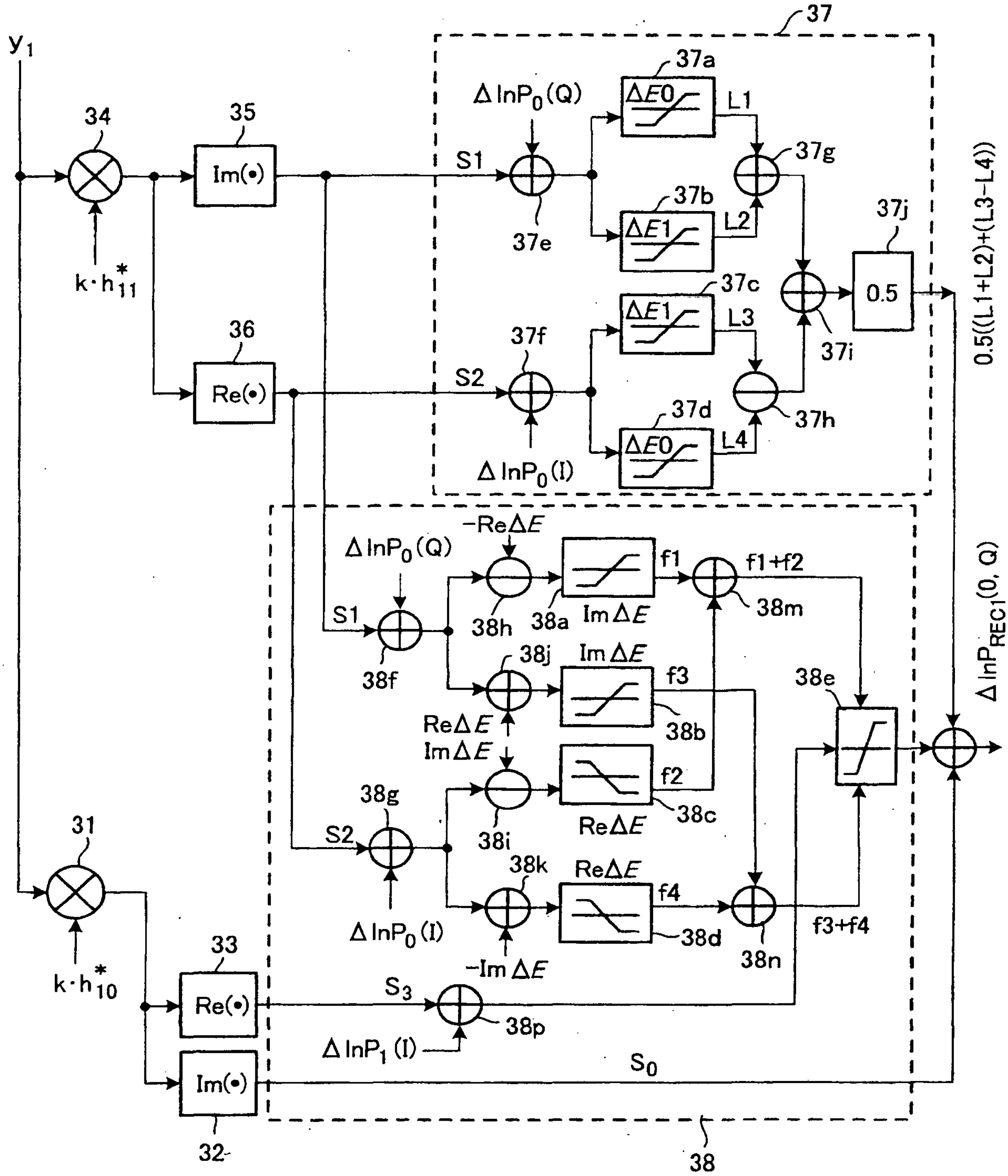

y1
34
35
Im(•)
k·h*11
36
Re(•)
37
37a
ΔlnP0(Q)
ΔE0
L1
37g
S1
37e
37b
ΔE1
L2
37j
37c
ΔE1
0.5
37i
37f
L3
S2
37d
37h
ΔE0
L4
ΔlnP0(I)
0.5((L1+L2)+(L3-L4))
-ReΔE
ΔlnP0(Q)
f1
f1+f2
38m
S1
38h
38a
ImΔE
38f
38j
ImΔE
f3
38e
ReΔE
38b
ImΔE
f2
38g
38c
ΔlnPREC1(0, Q)
31
38i
ReΔE
S2
38k
ReΔE
f4
ΔlnP0(I)
38d
f3+f4
33
-ImΔE
38n
k·h*10
Re(•)
S3
38p
ΔlnP1(I)
S0
Im(•)
32
38

FIG. 15

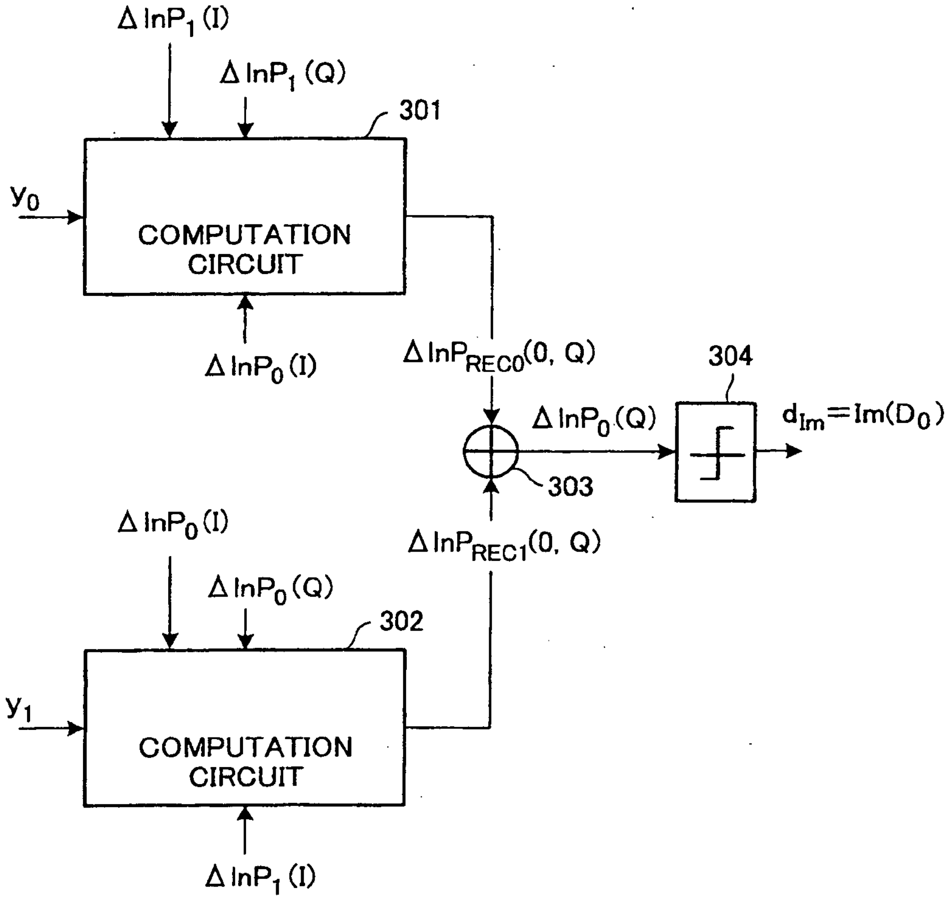
Δ lnP1 (I)
Δ lnP1 (Q)
301
y0
COMPUTATION CIRCUIT
Δ lnP0 (I)
Δ lnPREC0(0, Q)
304
Δ lnP0 (Q)
dIm=Im(D0)
303
Δ lnP0 (I)
Δ lnPREC1(0, Q)
Δ lnP0 (Q)
302
y1
COMPUTATION CIRCUIT
Δ lnP1 (I)

FIG. 16

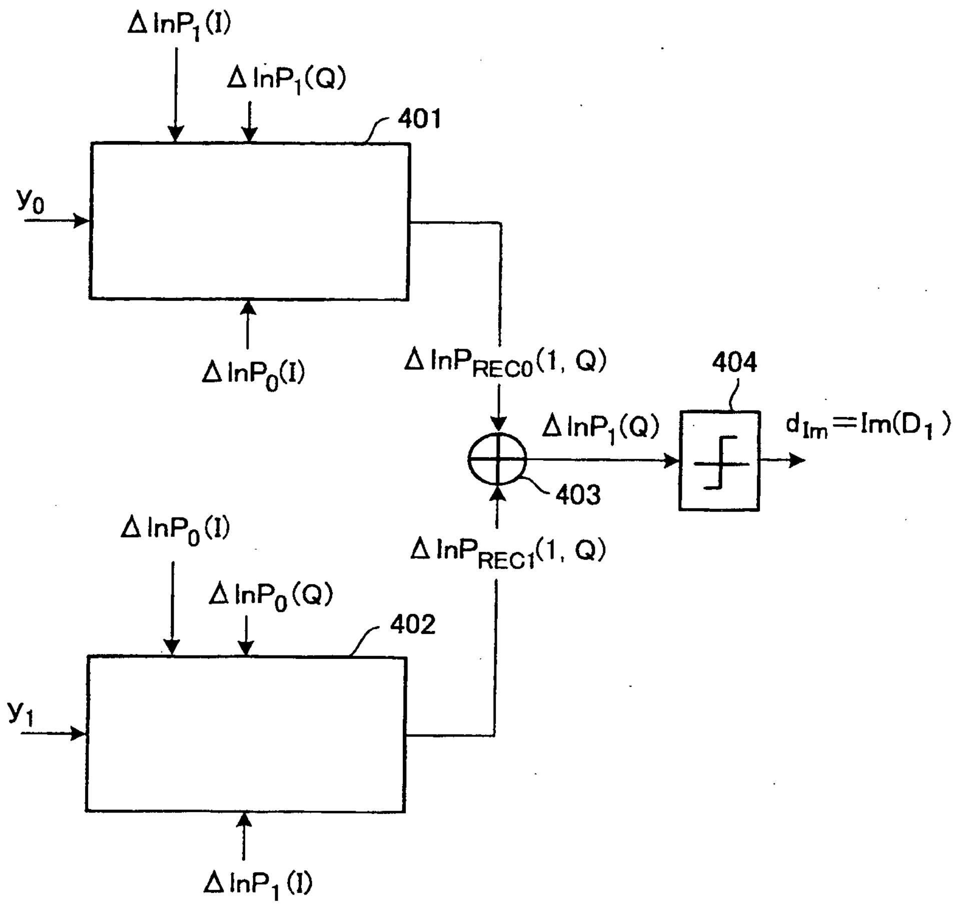
Δ lnP1(I)
Δ lnP1(Q)
401
y0
Δ lnP0(I)
Δ lnPREC0(1, Q)
404
Δ lnP1(Q)
dIm=Im(D1)
403
Δ lnP0(I)
Δ lnPREC1(1, Q)
Δ lnP0(Q)
402
y1
Δ lnP1(I)

FIG. 17

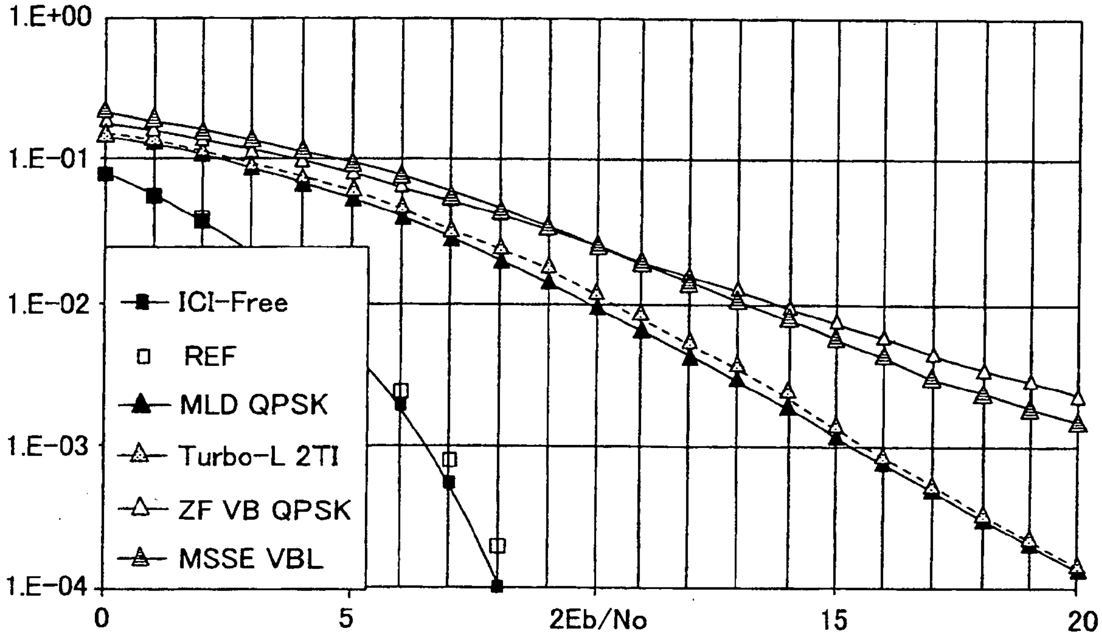
1.E+00
1.E-01
1.E-02
1.E-03
1.E-04
0
5
2Eb/No
15
20
ICI-Free
REF
MLD QPSK
Turbo-L 2TI
ZF VB QPSK
MSSE VBL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004297280 A
- US 2002193146 A1


### Non-patent literature cited in the description


- **A. VAN ZELST.** Space Division Multiplexing Algorithms. *10th Mediterranean Electrotechnical Conference 2000, MELECON 2000,* May 2000, vol. 3, 1218-1221
- **GEERT AWATER ; ALLERT VAN ZELST ; RICHARD VAN NEE.** Reduced Complexity Space Division Multiplexing Receivers. *Proc. IEEE VTC 2000,* 15 May 2000, vol. 2, 1070-1074
- **ALEXANDER N. LOZHKIN.** Novel Interactive MAP Detector for MIMO Communication. *Proc. WPMC '04,* 12 September 2004